(19) **Europäisches Patentamt / European Patent Office / Office européen des brevets**

(11) **EP 4 679 411 A1**

(12) # EUROPEAN PATENT APPLICATION

(43) Date of publication:
**14.01.2026 Bulletin 2026/03**

(21) Application number: **24306170.2**

(22) Date of filing: **11.07.2024**

(51) International Patent Classification (IPC):
**G09G 5/02** (2006.01)   **G09G 5/06** (2006.01)
**G09G 3/20** (2006.01)

(52) Cooperative Patent Classification (CPC):
**G09G 5/02; G06T 11/001; G09G 3/2003;
G09G 3/2022; G09G 5/06;** G09G 2320/0242;
G09G 2320/0247; G09G 2320/0666;
G09G 2330/021; H04N 1/6005

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **BLONDE, Laurent**
  **35235 THORIGNE-FOUILLARD (FR)**
• **DEMARTY, Claire-Helene**
  **35520 MONTREUIL LE GAST (FR)**
• **AUMONT, Franck**
  **35770 VERN SUR SEICHE (FR)**
• **REINHARD, Erik**
  **35630 HEDE-BAZOUGES (FR)**
• **LE MEUR, Olivier**
  **35160 TALENSAC (FR)**

(74) Representative: **Interdigital**
**Immeuble ZEN 2**
**845 A, avenue des Champs Blancs**
**35510 Cesson-Sévigné (FR)**

(54) **PARTITIONING COLOR TRANSFORM FOR ALTERNATING COMPLEMENTARY COLORS**

(57)   Methods and devices propose to use alternating complementary colors to reduce the energy consumption of an image or video, based on a double color look-up table storing pairs of alternating complementary colors being associated with an information indicative of a mode representing the selection process of the pair of colors. This allows to prevent interpolation of colors of the double color look-up table that were obtained using different modes which would lead to inconsistencies in the resulting image.

FIG. 7B

EP 4 679 411 A1

Processed by Luminess, 75001 PARIS (FR)

## Description

### TECHNICAL FIELD

The disclosure is in the field of multimedia content distribution, related to the reduction of energy consumption of images, and at least one embodiment relates more specifically to a partitioning color transform when using alternating complementary colors.

### BACKGROUND ART

Reducing the energy consumption of electronic devices has become a requirement not only for manufacturers of electronic devices but also to limit, as much as possible, the environmental impact and to contribute to the emergence of a sustainable display industry. The increase in display resolution from SD to HD, then to 4K and soon to 8K and beyond, as well as the introduction of high dynamic range imaging, has brought about a corresponding increase in energy requirements of display devices. This is not consistent with the global need to reduce energy consumption knowing that a huge number of devices has a display (i.e., TV, Mobile phones, tablets, etc.). Indeed, displays are the most important source of energy consumption, for consumer electronic devices, either battery-powered (e.g., smartphones, tablets, head-mounted displays, car display screens) or not (e.g., television sets, advertisement display panels).

Different display technologies have been developed in the recent years. Although modern displays consume energy in a more controllable and efficient manner than older displays, they remain the most important source of energy consumption in a video chain.

As far as backlight displays are concerned, their energy consumption is largely determined by the intensity of the backlight.

Organic Light Emitting Diode (OLED) is one example of display technology that finds an increasingly widespread use because of numerous advantages compared to former technologies such as Thin-Film Transistor Liquid Crystal Displays (TFT-LCDs). Rather than using a uniform backlight, OLED displays, as well as mini LEDS, are composed of individual directly emissive image pixels. OLEDs power consumption is therefore highly correlated to the image content and the power consumption for a given input image can be estimated by considering the values of the displayed image pixels.

It is therefore interesting to elaborate energy-aware images or videos, i.e., images or videos that will need less energy when displayed, notably on consumer electronics OLED displays. Techniques have been developed to reduce the energy consumption using spatially alternating complementary colors (SACC) or temporally alternating complementary colors (TACC). These techniques propose to replace an original color by a pair of alternating complementary colors that provide a perceptually similar image requiring reduced energy consumption.

### SUMMARY

A first aspect is directed to a method comprising for an input color, determining a pair of alternating complementary colors based on the input color, wherein an average color of the pair of alternating complementary colors is perceptually similar to the input color and wherein a sum of the energy consumed by displaying a pair of colors of the alternating complementary colors is lower than twice the energy consumed by displaying an input color, wherein the pair of colors of the alternating complementary colors is selected according to a selection mode.

A second aspect is directed to an apparatus comprising a processor configured to, for an input color, determine a pair of alternating complementary colors based on the input color, wherein an average color of the pair of alternating complementary colors is perceptually similar to the input color and wherein a sum of the energy consumed by displaying a pair of colors of the alternating complementary colors is lower than twice the energy consumed by displaying an input color, wherein the pair of colors of the alternating complementary colors is selected according to a selection mode.

Variants of first and second aspect further comprise determining a hue difference, a saturation difference and a luminance difference between respectively the hue value of the first color of the pair and the hue value of the second color of the pair, the saturation value of the first color of the pair and the saturation value of the second color of the pair, the luminance value of the first color of the pair and luminance value of the second color of the pair, and determining the selection mode, wherein the selection mode is a first mode identified as NoMode when the hue difference, the saturation difference and the luminance difference are not greater than respective thresholds, wherein the selection mode is a second mode identified as HueMode when the hue difference is greater than the saturation difference and also greater than the luminance difference, wherein the selection mode is a third mode identified as SatMode when the saturation difference is greater than the hue difference and also greater than the luminance difference, wherein the selection mode is a fourth mode identified as LumMode in the other case.

A third aspect is directed to non-transitory computer readable medium containing comprising instructions which, when the program is executed by a computer, cause the computer to carry out the described embodiments related to the first aspect.

A fourth aspect is directed to a computer program comprising instructions which, when the program is executed by a computer, cause the computer to carry out any of the described embodiments or variants related to the first aspect.

The above presents a simplified summary of the subject matter to provide a basic understanding of some aspects of the present disclosure. This summary is not an extensive overview of the subject matter. It is not intended to identify key/critical elements of the embodiments or to delineate the scope of the subject matter. Its sole purpose is to present some concepts of the subject matter in a simplified form as a prelude to the more detailed description provided below.

## BRIEF SUMMARY OF THE DRAWINGS

The present disclosure may be better understood by consideration of the detailed description below in conjunction with the accompanying figures in which:

FIG. 1 illustrates a block diagram of an example of display device in which various aspects and embodiments are implemented.

FIG. 2 illustrates the normalized response spectra of human retina cones (or spectral sensitivity functions).

FIG. 3A illustrates examples of transformation of colors into complementary colors according to the method of spatially alternating complementary colors.

FIG. 3B illustrates examples of replacement of a pixel color by a pair of colors according to the method of spatially alternating complementary colors.

FIG. 4A illustrates the temporal contrast sensitivity function for various adapting fields.

FIG. 4B illustrates the modulation sensitivity as a function of frequency for luminance and chromatic flicker.

FIG. 5A illustrates examples of transformation of colors into complementary colors according to the method of temporally alternating complementary colors.

FIG. 5B illustrates examples of replacement of a pixel color by a pair of colors according to the method of temporally alternating complementary colors.

FIG. 6A illustrates an example process for determining the pair of alternating complementary colors (ACC) for an input color, according to at least one embodiment.

FIG. 6B illustrates an example process for determining a pair of ACC colors using the SatMode according to at least one embodiment.

FIG. 7A illustrates a diagram representing a RGB or RGBW color space.

FIG. 7B illustrates a diagram representing an example of triangular pyramid extracted from the RGB or RGBW color space and the pair of pyramids representing the pairs of alternating complementary colors determined by the ACC algorithm.

FIG. 8 illustrates a process to build a double color LUT according to at least one embodiment.

FIG. 9A illustrates a first example of process to categorize the double color LUT according to at least one embodiment.

FIG. 9B illustrates a second example of process to categorize the double color LUT according to at least one embodiment.

FIG. 9C illustrates a process to determine a segmentation of the color gamut into ACC mode regions according to at least one embodiment.

FIG. 10 illustrates different aspects of the Gamut ID metadata as specified in IEC-61966-12-1.

FIG. 11 illustrates an example of a portion and slices of the Gamut ID used for ACC interpolation.

FIG. 12 illustrates an example of process for interpolating ACC colors according to at least one embodiment where the double color look-up table is enhanced with mode information.

FIG. 13 illustrates an example of interpolation according to the process described in FIG 12.

FIG. 14 illustrates an example of slice of a triangular pyramid extracted from the RGB color space for one pair of alternating complementary colors determined by the ACC algorithm using mask lines according to at least one embodiment.

FIG. 15 illustrates an example of process for interpolating ACC colors according to at least one embodiment using mask lines.

It should be understood that the drawings are for purposes of illustrating examples of various aspects, features and embodiments in accordance with the present disclosure and are not necessarily the only possible configurations. Throughout the various figures, like reference designators refer to the same or similar features.

## DETAILED DESCRIPTION

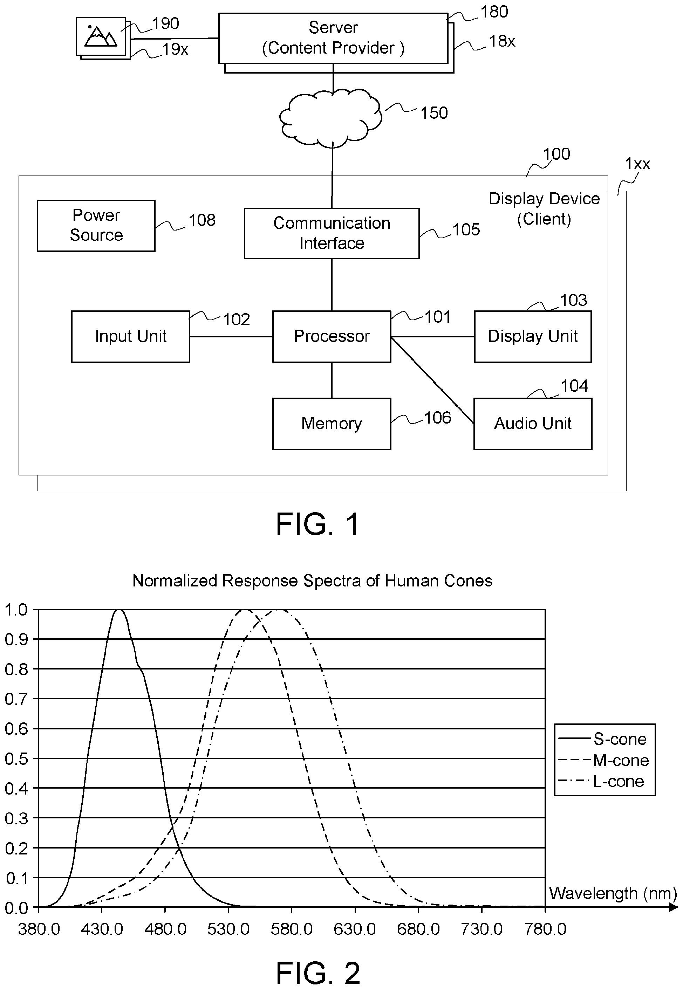

**FIG. 1** illustrates a block diagram of an example of display device in which various aspects and embodiments are implemented. In the depicted environment, a user interacts with the display device 100, for example a television, that is connected to a server 180 for example operated by a content provider. The server 180 delivers multimedia content 190 such as video streams based on images. In a video distribution system, multiple devices 100, 1xx are interacting with multiple content providers and corresponding servers 180, 18x delivering multiple multimedia content 190, 19x. A single content provider may use a plurality of servers. The devices exchange data through a communication network 150.

The communication network 150 preferably uses a communication standard to provide interoperability between content provider and display devices. Such communication standard may be wireless, such as cellular (e.g., LTE) communications, Wi-Fi communications, and the like, to ensure the mobility of the display device. Cable, satellite or terrestrial digital television broadcast communication may also be used for the communication network 150 as well as broadband television communications. Such digital television standards may on based on well-established standards like DVB, ATSC, or the like. General purpose network standards may also be used, for example based on Ethernet.

The display device 100 comprises a processor 101. The processor 101 may be a general-purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor may perform data processing such as the processes described below for controlling the energy consumption reduction of devices displaying a visual content.

The processor 101 may be coupled to an input unit 102 configured to convey user interactions. Multiple types of inputs and modalities can be used for that purpose. Physical keypad or a touch sensitive surface are typical examples of input adapted to this usage although voice control could also be used. In addition, the input unit may also comprise a digital camera able to capture still pictures or video in two dimensions or a more complex sensor able to determine the depth information in addition to the picture or video and thus able to capture a complete 3D representation.

The processor 101 may be coupled to a display unit 103 configured to output visual data to be displayed on a screen. Multiple types of displays can be used for that purpose such as a liquid crystal display (LCD) or organic light-emitting diode (OLED) display unit. The processor 101 may also be coupled to an audio unit 104 configured to render sound data to be converted into audio waves through an adapted transducer such as a loudspeaker for example.

The processor 101 may be coupled to a communication interface 105 configured to exchange data with external devices. The communication preferably uses a wireless communication standard to provide mobility of the display device, such as cellular (e.g., LTE) communications, Wi-Fi communications, and the like.

The processor 101 may access information from, and store data in, the memory 106, that may comprise multiple types of memory including random access memory (RAM), read-only memory (ROM), a hard disk, a subscriber identity module (SIM) card, a memory stick, a secure digital (SD) memory card, any other type of memory storage device. In embodiments, the processor 101 may access information from, and store data in, memory that is not physically located on the device, such as on a server, a home computer, or another device.

The processor 101 is configured to execute an image energy reduction algorithm that modifies an input image into an image that requires less energy when being used, for example displayed, in comparison to using the input image. Different techniques have been disclosed to provide such feature.

The processor 101 may receive power from the power source 108 and may be configured to distribute and/or control the power to the other components in the device 100. The power source may be any suitable device for powering the device. As examples, the power source may include one or more dry cell batteries (e.g., nickel-cadmium (NiCd), nickel-zinc (NiZn), nickel metal hydride (NiMH), lithium-ion (Li-ion), and the like), solar cells, fuel cells, and the like.

While the FIG. depicts the processor 101 and the other elements 102 to 108 as separate components, it will be appreciated that these elements may be integrated together in an electronic package or chip. It will be appreciated that the display device 100 may include any sub-combination of the elements described herein while remaining consistent with the embodiments described hereafter. The processor 101 may further be coupled to other peripherals or units not depicted in FIG. 1 which may include one or more software and/or hardware modules that provide additional features, functionality and/or wired or wireless connectivity. For example, the peripherals may include a universal serial bus (USB) port, a vibration device, a television transceiver, a hands-free headset, a Bluetooth® module, a frequency modulated (FM) radio unit, a digital music player, a media player, a video game player module, an Internet browser, and the like. For example, the processor 101 may be coupled to a localization unit configured to localize the display device within its environment. The localization unit may integrate a GPS chipset providing longitude and latitude position regarding the current location of the display device but also other motion sensors such as an accelerometer and/or an e-compass that provide localization services.

In at least one embodiment, the processor 101 of the display device 100 is configured to display on the display unit 103 an image according to embodiments described further below. In a first variant embodiment, the image 190 is obtained from the content provider server 180 through the communication network 150. In a second variant embodiment, the image is obtained from the memory 106, stored for example after being captured by the input unit 102 or being transferred from a server.

Typical examples of device 100 are smartphones, tablets, laptops, monitors, head-mounted displays, television sets, video projectors, computer screens, vehicles (e.g., control and/or entertainment systems for cars, planes, boats, etc.), advertisement display panels, medical monitors, etc. However, any device or composition of devices that provides similar functionalities can be used as display device 100 while still conforming with the principles of the disclosure.

In at least one embodiment, the device does not include a display unit but prepares data representative of an energy-reduced visual content so that another device can utilize the energy-reduced visual content for further processing. In at least one embodiment, such device prepares data to be displayed by another device such as a screen. Examples of such devices are set top boxes, media players, desktop computers, encoders, decoders, servers, computing grids, cloud computers, etc.

At least one example of an embodiment can involve a device including an apparatus as described herein and at least one of (i) an antenna configured to receive a signal, the signal including data representative of the image information, (ii) a band limiter configured to limit the received signal to a band of frequencies that includes the data representative of the image information, and (iii) a display configured to display an image from the image information.

At least one example of an embodiment can involve a device as described herein, wherein the device comprises one of a television, a television signal receiver, a set-top box, a gateway device, a mobile device, a cell phone, a tablet, a computer, a laptop, or other electronic device.

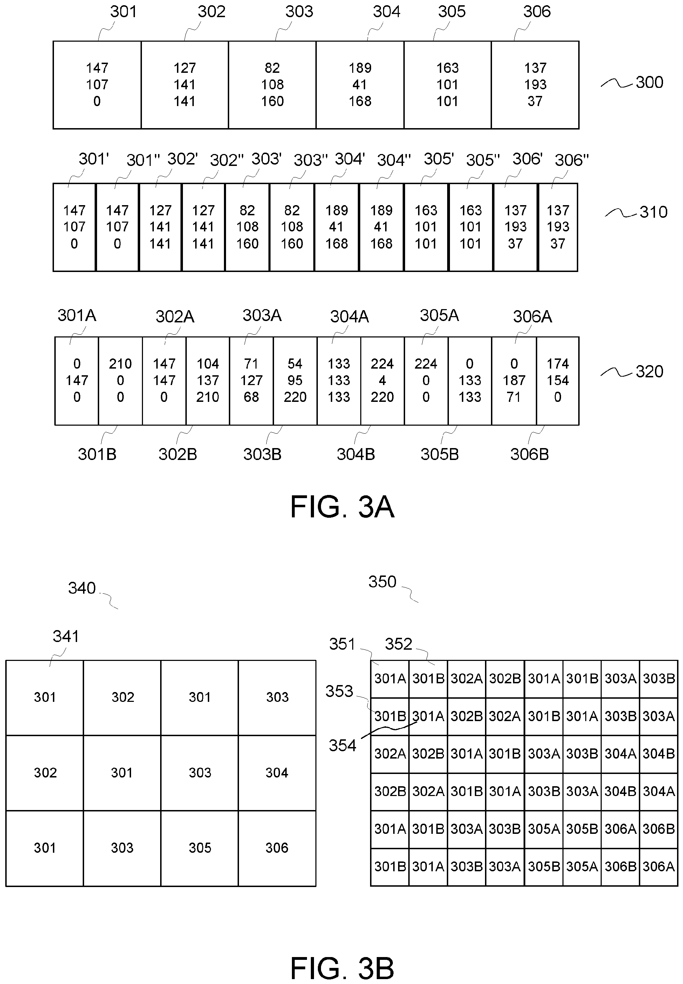

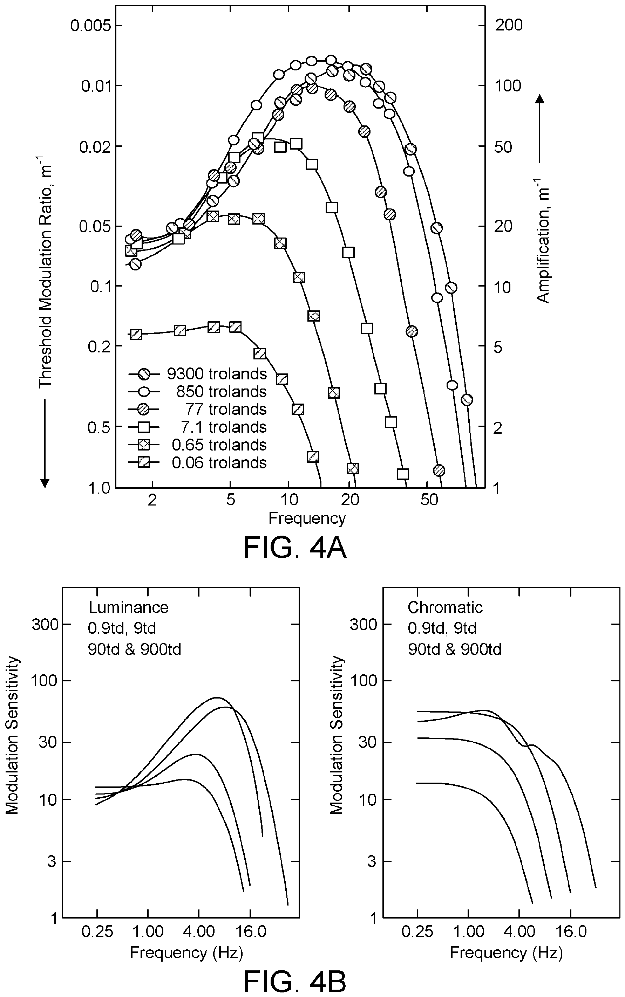

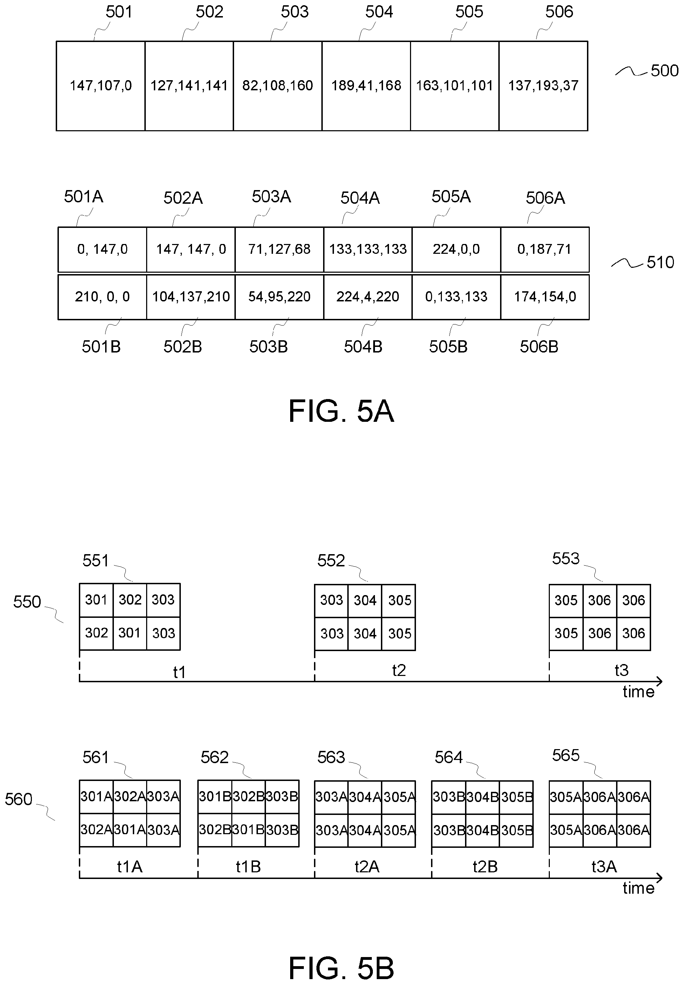

Two techniques allow to minimize the energy consumption when displaying (or more generally when using) an image. These techniques are based on using alternating complementary colors to modify an image so that it requires less energy. The first technique modifies the image through a spatial alternating arrangement (FIGs. 2, 3A, 3B) and the second uses a temporal alternating arrangement (FIGs. 4A, 4B, 5A, 5B).

**FIG. 2** illustrates the normalized response spectra of human retina cones (or spectral sensitivity functions). Electromagnetic radiation is characterized by its wavelength (or frequency) and its intensity. The range of wavelengths humans can perceive is approximately from 380 nm to 780 nm. When the wavelength is within this range, it is known as "visible light". Perception of color is based upon the varying sensitivity of different cells in the retina (color receptors: cones and rods) to light of different wavelengths. Human observers have three types of color receptors, known as cone cells. This confers trichromatic color vision, cones being usually labeled either according to the wavelengths of the peaks of their spectral sensitivities: short (S), medium (M), and long (L), or simply according to the primary colors those peaks are centered on: Blue, Green, or Red as illustrated in FIG.2.

Trichromatic theory teaches us that the color a human observer perceives of a light spectrum can be characterized by 3 single scalar values. From a mathematical point a view, this initial step of human vision could be compared to that of a triple-kernel energy computation process. Let si($\lambda$) be the wavelength response of a given light spectrum, and l($\lambda$), m($\lambda$), and s($\lambda$) be respectively the spectral sensitivity functions of the L, M, and S cones, equation 1 below defines Li, Mi, and Si. These are the 3 scalar values that characterize the color of spectrum si($\lambda$) seen by a human observer.

$$L_i = \int_{-\infty}^{+\infty} s_i(\lambda).l(\lambda)d\lambda$$
$$M_i = \int_{-\infty}^{+\infty} s_i(\lambda).m(\lambda)d\lambda \qquad (1)$$
$$S_i = \int_{-\infty}^{+\infty} s_i(\lambda).s(\lambda)d\lambda$$

Although the spectrum of light reaching the eye from a given direction determines the color sensation in that direction, there are many more possible spectral combinations that result in the same color sensations. In colorimetry, the term metamerism refers to the matching of a same apparent color of light signals with different spectral power distributions. Color spectra that match this way are called metameric spectra. Based on Equation (1), the mathematical definition of metamerism would be $\forall \lambda \in$ R :

$$\exists \lambda \in [380, 780] \,.\, s_1(\lambda) \neq s_2(\lambda) \qquad (2a)$$

$$\int_{-\infty}^{+\infty} s_1(\lambda).l(\lambda)d\lambda = \int_{-\infty}^{+\infty} s_2(\lambda).l(\lambda)d\lambda \qquad (2b)$$

$$\int\limits_{-\infty}^{+\infty} s_1(\lambda).m(\lambda)d\lambda = \int\limits_{-\infty}^{+\infty} s_2(\lambda).m(\lambda)d\lambda \qquad (2c)$$

$$\int\limits_{-\infty}^{+\infty} s_1(\lambda).s(\lambda)d\lambda = \int\limits_{-\infty}^{+\infty} s_2(\lambda).s(\lambda)d\lambda \qquad (2d)$$

where $s_1(\lambda)$ and $s_2(\lambda)$ are the spectral compositions of two metameric (yet different) spectra.

The term spatial resolution refers to the distance between independent measurements, or the physical dimension that represents a pixel of an image. It is thus the distance between two adjacent pixels of a displayed image. Visual acuity of human eye limits the spatial resolution that the visual system can process. According to various studies performed, human visual system can discern spatial differences of ~0.6 arcminutes. As $1' \times \pi/(60 \times 180) = 0.0002909$ rad, 0.6 arcminutes = 0.0001745328 rad. Above a given viewing distance, two adjacent pixels cannot be resolved, they are perceived as a single pixel. The luminous power from the various subpixels is summed up and this gives the apparent continuity of images as seen on a screen. This is the notion of spatial fusion. Embodiments described herein are designed to benefit from the visual fusion of the human visual system and more particularly, the unification of visual excitations from the corresponding retinal images of adjacent pixels into a single visual percept. For example, the usual viewing distance for a mobile phone screen is 25-30cm. So, if the distance between two-point size light sources is less than 0.044-0.052mm, they will appear as single source. For a TV screen, if the distance between two-point size light sources is less than 0.52mm, they will typically appear as single source.

At least one technique uses these principles to determine a pair of colors that, when being spatially combined, is perceived by a human observer as another (single and stable) color. Indeed, the technical effect used herein relies on the visual fusion characteristic of the human vision system. In other words, when visualizing a display of spatially alternating complementary colors, the human visual system perceives a single corresponding color that visually has the same perceptual characteristics.

Therefore, the high-level principle of a first technique to minimize the energy consumption can be considered as adding a dimension to the image signal by replacing a color by two visually complementary colors, the two colors being arranged spatially. The two adjacent pixels of spatially alternating complementary colors would be perceived by the user as a single pixel with maximal visual similarity. This principle is herein named spatially alternating complementary colors (SACC).

A first technique to reduce the energy needed to display the modified pixels on a display device is based on modifying a pair of color pixels using SACC while preserving as much as possible the visual similarity with the original pair of pixels and quality of experience. Such methods exploit the principle of visual and spatial fusion and propose to set the colors of a pair of adj acent pixels of the image to a pair of spatially alternating complementary colors requiring less energy for display. A pair of spatially alternating complementary colors is selected so that the average color of the pair of colors is perceptually identical to an input color or an average of input colors and the energy of the pair of colors is lower than the energy of the input color. The term "energy of the color" should be understood here as the energy needed for rendering a pixel of the color. Different types of spatial replacement are described: pixel doubling, pixel skipping and pixel averaging.

A first method for SACC is based on pixel doubling (it may also be understood as pixel splitting). In other words, the number of pixels of an input image is doubled to create a couple of adjacent pixels, either in width only or in height only or in both dimensions, thus adding new "duplicated" pixels forming the second half of the pair of adjacent pixels. A pixel of the original image is replaced by two pixels of same color (thus the notion of splitting). The pair of adjacent pixels (an original pixel and a duplicated pixel) is then replaced by a pair of pixels of spatially alternating complementary colors, in other words, the pair of spatially alternating complementary colors are assigned to the adjacent pixels. In the case where the original content sent to a display is of a lower resolution than the resolution of the display, some internal upsampling is usually undergone inside the display itself. In such case, this upsampling may be replaced by this first method based on pixel doubling which implicitly uses an upsampled resolution.

A second method for SACC is based on pixel skipping where one pixel over two is set free by cancelling the content initially displayed on it, and the pair of spatially alternating complementary colors is determined based on the color of the first pixel of each adjacent pair of pixels of the original image only, thus no more taking into account the color of the second pixel of the original pair. This allows to set the colors of an original pair of adjacent pixels by a pair of spatially alternating complementary colors: the first pixel of the original pair being assigned the first color of the pair of spatially alternating complementary colors, and the second pixel of the original pair being assigned the second color of the pair of spatially alternating complementary colors.

A third method for SACC is based on pixel averaging where the pair of spatially alternating complementary colors is determined based on an average color computed from the colors of the first and second pixels of a couple of adjacent pair of pixels of the original image. The first pixel of the original adjacent pair is assigned the first color of the pair of spatially alternating complementary colors and the second pixel of the original adjacent pair is assigned the second color of the pair of spatially alternating complementary colors. Unlike the second method based on pixel skipping, this method takes into account the colors of all the pixels of the original image or video.

For all three methods, different arrangements of adjacent pixels can be used, for example based on stripe patterns, mosaic patterns or random patterns.

The notion of adjacent pixel is introduced above to facilitate the understanding. However, the three SACC methods described above share the same principle of replacing an input pixel of an input color by a couple of pixels of spatially alternating complementary colors.

FIG. 3A illustrates examples of transformation of colors into complementary colors according to the method of spatially alternating complementary colors. In this figure, the line 300 corresponds to an extract of an original image and represents a line of pixels 301 to 306. The three numbers inside each block correspond to the color of the corresponding pixel, represented by RGB values expressed using an 8-bit depth. For example, the first pixel 301 is defined by the following values for the color components of the pixel: 147 for red, 107 for green and 0 for blue. This results in a brown pixel. The colors of the other pixels are respectively medium grey for second pixel 302, navy blue for the third pixel 303, dark magenta for the fourth pixel 304, reddish brown for the fifth pixel 305, and bright green for the sixth pixel 306.

The figure illustrates a method based on pixel doubling in horizontal direction. For that, it is necessary to duplicate the pixels 301 to 306, thus leading to the line 310 where for example the pixel 301 is duplicated into pixels 301' and 301". In this method, the pixels whose color is to be replaced are horizontally adjacent, in other words, the pixels 301' and 301" for a pair of adjacent pixels, the next pair is 302' and 302", and so on up to the pair 306' and 306".

Line 320 shows a set of pairs of pixels (301A, 301B to 306A, 306B) having spatially alternating complementary colors and used to replace the original pixels 301 to 306. Similar to line 300, the values inside the blocks represent the colors of the pixels. Thanks to the spatial fusion of the human visual system, the spatial arrangement of the green pixel 301A and the red pixel 301B is perceived by a human observer as a brown pixel identical in perceived color to pixel 301, or more generally to the combination of pixels 301' and 301". A complete example is described below in relation with FIG.3B. In other methods, for example when increasing the image resolution is not possible, other techniques are used, such as pixel skipping or pixel averaging.

FIG. 3B illustrates examples of replacement of a pixel color by a pair of colors according to the method of spatially alternating complementary colors. In the figure, the array 340 represents an example of an original (i.e., before being modified) image to be displayed, here comprising three rows of four pixels each (for the sake of simplicity of the drawings). Each pixel is represented by a rectangle comprising a color value according to the colors defined in FIG.3A. For example, the pixel 341 in the upper left corner is a brown pixel. In a first variant of such method (not illustrated), the width is doubled compared to the original image. For example, if the input image would have a resolution of 1920 by 1080 pixels, the modified image where the original pixels would be replaced by spatially alternating complementary color pixels would have a resolution of 3840 by 1080 pixels. In a second variant of such method (not illustrated), the height is doubled compared to the original image. For example, if the input image would have a resolution of 1920 by 1080 pixels, the modified image where the original pixels would be replaced by spatially alternating complementary color pixels would have a resolution of 1920 by 2160 pixels.

In a third variant of such method as illustrated in the figure, both the width and the height are doubled compared to the original image. For example, if the input image would have a resolution of 1920 by 1080 pixels, the modified image where the original pixels would be replaced by spatially alternating complementary color pixels would have a resolution of 3840 by 2160 pixels. In other words, each pixel would be replaced by a set of four pixels of two spatially alternating complementary colors. The array 350 represents an image based on the original image of array 340 and modified according to this third variant. The processor first inserts additional columns (second, fourth, sixth and eight columns) and lines (second, fourth, sixth and eight lines) to create duplicate pixels. Then the processor selects a first pair of adjacent pixels, for example the horizontal pair of pixels 351 and 352. From the color (301) of the first pixel 301A of the first pair of adjacent pixels, the processor determines a pair of spatially alternating complementary colors (301A, 301B) that, when combined, look identical in perceived color to the original color 301 but require less energy for its display. This process may use a table storing an association between a color and a pair of colors looking similar in perceived color but requiring less energy. These colors are then used to set the colors of the pair of adjacent pixels. As a result, the color of pixel 351 is set to 301A while the color of pixel 352 is set to 301B. The process is iterated over all pairs of adjacent pixels in both the horizontal and the vertical directions. The result is a modified image, whose pixels have the value of the array 350, that looks identical to the original image 300 but requires less energy for its display when displayed on a screen. For example, the brown pixel 341 is replaced by four pixels 351, 352, 353, 354 of respective colors values 301A (green), 301B (red), 301B (red) and 301A (green). The determining of the pair of spatially alternating complementary colors corresponding to the color 301 of original pixel 341 needs to be done only once. It results on the pair (301A, 301B) that is applied onto the 4 pixels 351, 352, 353, 354 in a mosaic arrangement (i.e., changing the order between the colors of the pair for the second line) to provide a good distribution of the colors.

The first and second variants may be implemented internally in a display panel by physically doubling the number of pixels in one of the directions but without providing access to the additional pixels to the outside world. The third variant is of more general use. Indeed, the resolution of content currently available is often inferior to the capabilities of the display device. It is quite common to have a full HD content (1920x1080) displayed on a UHD-capable (3840x2160) or 4K-capable (4096x2160) device. Therefore, this technique could be considered as a simple upscaling function that while providing the additional pixels for the upscaling also provides a reduction of the energy required for displaying the upscaled image.

In the description of these methods, the first pixel of a pair of pixels is always replaced by the first color of the pair of spatially alternating complementary colors. In at least one variant method, an alternance is introduced between lines (respectively columns) regarding the order of selection of the pair of colors. In a first line (respectively column), the color of the first pixel of a pair of pixels is replaced by the first color of the pair of spatially alternating complementary colors and the color of the second pixel of a pair of pixels is replaced by the second color of the pair of spatially alternating complementary colors but in the second line (respectively column), the color of the first pixel of a pair of pixels is replaced by the second color of the pair of spatially alternating complementary colors and the color of the second pixel of a pair of pixels is replaced by the first color of the pair of spatially alternating complementary colors.

A second technique to minimize the energy consumption uses temporally alternating complementary colors to modify an image. This second technique is based on the principles described in relation with FIG.2 and the principles described hereafter in FIGs. 4A and 4B.

**FIG. 4A** illustrates the temporal contrast sensitivity function for various adapting fields. In the spatial domain, spatial vision can be characterized by the contrast sensitivity function (CSF). To thoroughly investigate the visual system sensitivity to flicker, a Temporal Contrast Sensitivity Function (TSF) or a De Lange function can be plotted (De Lange, 1958). A TSF is a plot of how flicker varies with contrast and vice versa. In this figure, the area above the curve represents the area where no flicker is perceived by a human observer and the area below the curve represents the area where flicker is perceived. The eye appears to be most sensitive to a flicker frequency of 15 to 20 Hz at higher luminances (photopic vision). At photopic light levels, less than 1% contrast is required to detect the stimulus and the high temporal frequency cut off is close to 60 Hz. At lower light levels the maximum contrast is about 20% and the high temporal frequency cut off is approximately 15 Hz. To detect flicker of high frequencies, maximum contrast is required. Temporal resolution is not as efficient at low luminances (scotopic vision).

**FIG. 4B** illustrates the modulation sensitivity as a function of frequency for luminance and chromatic flicker. In this figure, the luminance levels are measured in trolands (td) that characterize retinal illuminance. This FIG.was obtained by psychovision studies, in a typical application of Heterochromatic Flicker Photometry (HFP). The participants viewed a stimulus that alternated rapidly in time between two lights of different colors; the participant then had to adjust the intensity of one of the two lights (i.e., the amplitude of the light's spectrum) to minimize the sensation of flicker produced by the alternating lights. The FIG.on the left side is related to luminance flicker while the FIG.on the right side is related to chrominance flicker. HFP has long been the standard psychophysical method for finding equiluminant colors.

While the SACC technique previously described is based on spatial fusion, another technique, hereafter named Temporal Alternating Complementary Colors (TACC) is based on temporal fusion. The principles illustrated in FIGs. 5A and 5B are used to determine a pair of colors that, when being temporally combined, are perceived by a human observer as another (single and stable) color. The technical effect used herein relies on temporal psychovisual modulation and the existence of a maximum cutoff frequency in the flicker sensitivity of human eye. Therefore, the high-level principle of TACC can be considered as adding a dimension to the image signal by temporally duplicating each pixel into two visually complementary temporally successive pixels and using this added dimension to minimize the pixel equivalent energy consumption. The two temporally successive pixels would be perceived by the user as a single pixel if the alternance between these pixels is faster than the flicker fusion frequency.

Normal flicker fusion frequency is about 50Hz to 60Hz and depends on retinal illumination. However, sensitivity to flicker in equiluminance situations is smaller (20Hz to 30Hz) than in situations where luminance varies between the two images of a pair. Then with the additional specific condition that the difference in luminance between two colors is small enough, flicker caused by the alternation of two colors is minimal. This equiluminant condition, mixed with the basic colors alternance configuration, can be used to limit the visibility of flicker.

**FIG. 5A** illustrates examples of transformation of colors into complementary colors according to the method of temporally alternating complementary colors. In this figure, the line 500 shows a succession of pixels 501 to 506. The three numbers inside each block correspond to the color of the corresponding pixel, represented by RGB values expressed using an 8-bit depth. For example, the first pixel is defined by the following values for the color components of the pixel: 147 for red, 107 for green and 0 for blue. This results in a brown pixel. The colors of the other pixels are respectively medium grey for second pixel 502, navy blue for the third pixel 503, dark magenta for the fourth pixel 504, reddish brown for the fifth pixel 505, and bright green for the sixth pixel 506.

Line 510 shows a set of pairs of temporally successive pixels (501A, 501B) to (506A, 506B). These pairs of temporally successive pixels correspond to the alternating complementary colors that could be used to replace the original pixels 501 to 506. Similar to line 500, the values inside the blocks represent the colors of the temporally successive pixels.

In one example method, the temporally successive pixels are half the duration of the original pixels. In other words, a first image frequency (for instance 60 Hz) is doubled into a second image frequency (for instance 120 Hz) and an input image is decomposed into an output image pair displayed at the second image frequency. For example, the pixel 501 displayed in the input image at a frequency of 60 Hz could be replaced by the succession of the pixels 501A (green pixel) and 501B (red pixel) displayed at a global frequency of 120 Hz. The succession of the green and red pixels is perceived by a human observer as a brown pixel, thanks to the heterochromatic flicker fusion. A complete example is described below in relation with FIG.5B.

**FIG. 5B** illustrates examples of replacement of a pixel color by a pair of colors according to the method of temporally alternating complementary colors. In this method based on frame doubling, the display frequency is doubled compared to the original image frequency. For example, if the sequence of images was intended to be displayed at 50 Hz, the display frequency is doubled to display a sequence of modified images at 100 Hz, allowing to replace the original pixels by alternating complementary color pixels and thus allowing to reduce the energy consumption of the display while preserving the quality of experience.

In the figure, the line 550 represents a temporal sequence of original (i.e., before being modified) images to be displayed, here comprising three images 551, 552, and 553. These images are displayed respectively during the periods t1, t2 and t3. In the example of a 50 Hz display frequency, the length of these periods is 20 ms. For the sake of simplicity of the drawings, the images 551, 552, and 553 are composed of 2 rows of three pixels each. The pixels are represented here by numbered blocks. The number identifies the pixel color with reference to the colors introduced in FIG.5A. For example, the first line of image 551 is composed of pixels 301, 302, and 303. Therefore, the first pixel 301 of this line is brown with RGB value of 147, 107, 0, the second pixel 302 is navy blue with RGB values of 127, 141, 141, and the third pixel 303 is dark magenta with RGB values of 82, 108, 160. In the second line, the three pixels are respectively navy blue, brown and dark magenta.

The line 560 represents a temporal sequence of the modified image to be displayed, comprising images 561, 562, 563, 564, and 565. Each of these images is displayed for half the duration compared to the line 550, in correspondence with the frequency doubling. Therefore, the initial 50Hz display frequency for line 550 is doubled to 100 Hz in line 560 and the periods t1A, t1B, t2A, t2B and t3A are 10ms long. Compared to line 550, a double number of images are displayed in line 560. This allows to insert intermediate images to introduce the alternating complementary color pixels, thus allowing to reduce the energy consumption when displaying the image.

For each pixel of the original image 551, a color pair is determined as described earlier in relation to FIG. 5A. This color pair is used to define a first pixel of the first color of the color pair for image 561 and a second pixel of the second color for image 562, the two pixels being displayed successively at the double frequency of the expected display of the original pixels. For example, the brown pixel 301 of image 551 is replaced by a green pixel 301A in image 561 and a red pixel 301B in image 562. These replacement red and green pixels are displayed half the time of the original brown pixel. As described previously, thanks to the human visual system color fusion, these pixels will be perceived by a human viewer as having the brown color of pixel 301, while requiring less energy for their display.

The frame doubling mechanism for pixel replacement by alternating complementary color pixels has been presented in FIG.5B when applied to a sequence of images, in other words, a video. However, the same principle applies when displaying a single static image (e.g., text edition application on a computer screen content, configuration screen on a tablet, email application on a smartphone, static image on an advertisement screen, etc.). In this case, the FIG.5B would be restricted to the elements related to image 551 (the single image to be displayed) and the images 561 and 562. Instead of conventionally displaying the image 551 at a given frequency, the images 561 and 562 would be displayed in alternance at a double frequency.

In other methods, for example when doubling the display frequency is not possible, other techniques are used to replace a color by a pair of colors, such as frame skipping or frame averaging. For both techniques, referring to FIG.5B, the original video would display a second image during t1 between the image 551 and the image 552. The frame skipping method simply discards this second image so that the same principles than the frame doubling technique described above apply. The frame averaging method also discards this second image but before that, the values of pixels of the image 551 are replaced by the average values of pixels of the image 551 and of the discarded image. After that step, the same principles than the frame doubling technique described above apply.

Facing the need to reduce the energy footprint in the mobile and CE domain, the alternating complementary color (ACC) algorithms have the objective and capacity to minimize the energy consumed by displays and simultaneously to preserve quality of experience for the user. These algorithms are defined to manipulate display colors, replacing an original color by a pair of colors, alternating temporally (TACC) or spatially (SACC), which visually sum up to the original color perception. In other words, in the ACC context, the process transforms an input color $C_I$, for example with RGB values $R_I G_I B_I$, into a pair of colors $C_A$, $C_B$, for example with RGB value $R_A G_A B_A$ and $R_B G_B B_B$. This pair of colors is later recombined providing a similar color perception, and a reduced energy consumption.

A color pair creation process based on the ACC algorithm selects a color pair that optimizes the perceived color similarity between the color pair and the original color for each image pixel and minimizes the energy consumption of the color pair compared to the original color. However, for some input colors, for algorithmic or topological reasons, no modification is done (the two colors of the pair are kept the same as the original color). This is typically the case when the best selected pair of color does not reduce the energy consumption.

The ACC process results in associating one color, with a pair of two alternating complementary colors. These correspondences can be stored for example in a single input / double output color set or in a pair of single input / single output color sets. Such color sets take the generic form of data structures or functions or data structures combined with adjunct functions and are often implemented using look-up tables (LUT), hereafter referenced as double color LUT. In theory, double color LUTs can be huge as potentially they might store associations for millions of colors, hence the need to subsample the color sets in a color space to compact the color representation data, e.g., for transmission, and/or storage, and to interpolate the subsampled color sets while using them to replace colors by ACC color pairs. For example, although 24 bits (8 bits per color) color images are handled, a subsampled double color LUT with only 6 bits per color may be used and thus requires an interpolation to handle the full color range.

In the general case, using an interpolation can be responsible for some approximation errors. If some discontinuities exist in the color space represented by the double color LUT, interpolating colors across these discontinuities will likely generate erroneous results. It appeared that the ACC algorithms exhibit different behaviors depending on the input color. An input color might result into a pair of colors with different hues (for example a brown color will result in a red and green pair of colors), or it might result into a pair of colors with different saturations (for example a blueish color will result into a first desaturated version of the blueish color and a second more saturated version of the blueish color). In some cases, no pair of colors with reduced energy can be found so that the input color is kept. In some cases, a difference of luminance may be enabled between the colors of the replacing pair.

Because of these different behaviors and choices of color pair types, if some interpolation process is needed in the resulting color set, then it might generate erroneous resulting colors when interpolating between colors belonging to pairs where pair members are of different behaviors/types. For example, for an orange original color saturated to some degree, the first color of the color pair may be a somehow saturated red while the second color of the color pair may be a somehow saturated green. In this example the two colors of the pair (red and green) replacing the original orange color are of similar saturation. For a lighter orange original color, somehow desaturated, the first color of the pair may be an even more saturated orange, and the second color of the pair may be a more desaturated orange. In this example, the two colors of the pair replacing the lighter orange original color are of similar hue (i.e., orange) but of different saturation. Interpolating between these two pairs of colors may lead to an erroneous color pair. Interpolating between the two original colors would certainly give an orange color, between saturated orange and lighter orange. However, interpolating with the members of the two pairs corresponding each to an original color might be first, interpolating, for the first members of the pairs, between a somehow saturated red ($C_A$ for first original color) and a more saturated orange ($C_A$ for second original color) and second, for the second members of the pairs, between a somehow saturated green ($C_B$ for first original color) and a more desaturated orange ($C_B$ for second original color). The $C_A$ color for the first resulting color of the pair would be between saturated red and more saturated orange while the $C_B$ color for the second resulting color of the pair would be between saturated green and more desaturated orange. There are risks that the alternation of the two resulting colors $C_A$ and $C_B$ does not match the original orange color visually, because of interpolation errors.

Embodiments described hereafter have been designed with the foregoing in mind and propose to use alternating complementary colors to reduce the energy consumption of an image or video, based on a double color look-up table storing pairs of alternating complementary colors being associated with an information indicative of a mode representing the selection process of the pair of colors. This allows to prevent interpolation of colors of the double color look-up table that were obtained using different modes which would lead to inconsistencies in the resulting image. Embodiments consider conveying the information indicative of a mode directly as a parameter of the double color LUT or using standardized Gamut ID metadata. Another embodiment is based on a non-enhanced double color LUT but proposes to introduce mask lines that correspond to regions where interpolation should not be done.

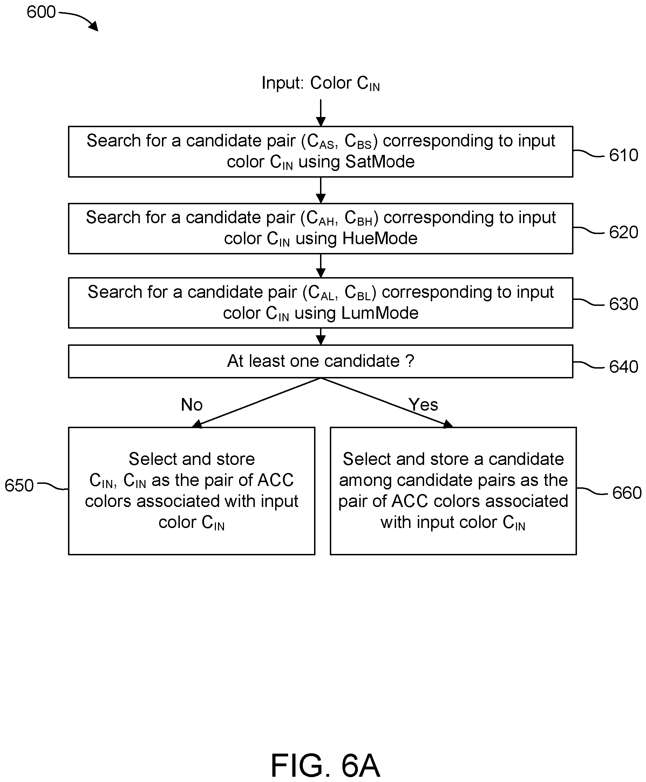

**FIG. 6A** illustrates an example process for determining the pair of alternating complementary colors for an input color, according to at least one embodiment. Such process is for example implemented in the device 100 of FIG. 1. The input of the process 600 is an input color $C_{IN}$.

In step 610, the processor searches for a candidate pair ($C_{AS}$, $C_{BS}$) corresponding to the input color $C_{IN}$ and determined according to a mode called SatMode. This mode corresponds to the situation where the selected pair of ACC colors have varying saturation, in other words, for colors belonging to a SatMode region, the gradient of such region varies from the white/grey colors to saturated colors but the same (or a similar) hue is kept. For example, a light orange color may be replaced by a pair of colors comprising a more saturated orange and a more desaturated (i.e., less saturated) orange.

In step 620, the processor searches for a candidate pair ($C_{AH}$, $C_{BH}$) corresponding to the input color $C_{IN}$ determined according to a mode called HueMode. This mode corresponds to the situation where the selected pair of ACC colors shows hue differences. The segment connecting the two colors of the pair of ACC colors is parallel to the gamut border. For example, a brown color is replaced by a pair of colors comprising a red color and a green color.

In step 630, the processor searches for a candidate pair ($C_{AS}$, $C_{BS}$) corresponding to the input color $C_{IN}$

determined according to a mode called LumMode. This mode corresponds to the situation where the selected pair of ACC colors show luminance differences, a color being replaced by a pair of colors comprising a darker and a lighter color. For example, a black color and a white color will form a grey, while a dark orange and a light orange will form a mid-level orange.

In step 640, it is tested if at least one of the modes resulted in the selection of a candidate. If this is not the case (in branch "no"), the processor jumps to step 650. This means that the ACC algorithms could not determine a pair of colors that is perceptually similar enough to the input color and that requires less energy, while also respecting the belonging of the two colors of the pair to the same Hue-, Sat-, or Luma-mode. In step 650, a pair composed of twice the input color $(C_{IN}, C_{IN})$ is associated with the input color, as well as the mode that lead to this selection which is called "noMode".

When the test of step 640 is yes, corresponding to the case where at least one of the modes resulted in the selection of a candidate, the processor jumps to step 660. In step 660, if a single candidate pair was determined, it is chosen as the best pair and associated with the input color, as well as the mode that lead to the selection of the pair. In step 660, if multiple candidate pairs were determined, they are compared together and one of them is selected. In at least one embodiment, the pair selected is the pair with the lowest energy requirements. In at least one embodiment, the pair selected is the pair with closest distance to the input color preferably in a visual color space.

The association as done in the steps 650 and 660 may be implemented using a correspondence table, such as a look-up table that is indexed by the input color and that stores the pair of colors corresponding to the input color and the mode used to determine the pair of ACC colors, selected among "NoMode", "SatMode", "HueMode" and "LumMode" or other modes that can be defined for the purpose of the invention. This correspondence table can then be used by a device to replace the colors of an image by a pair of colors respectively associated.

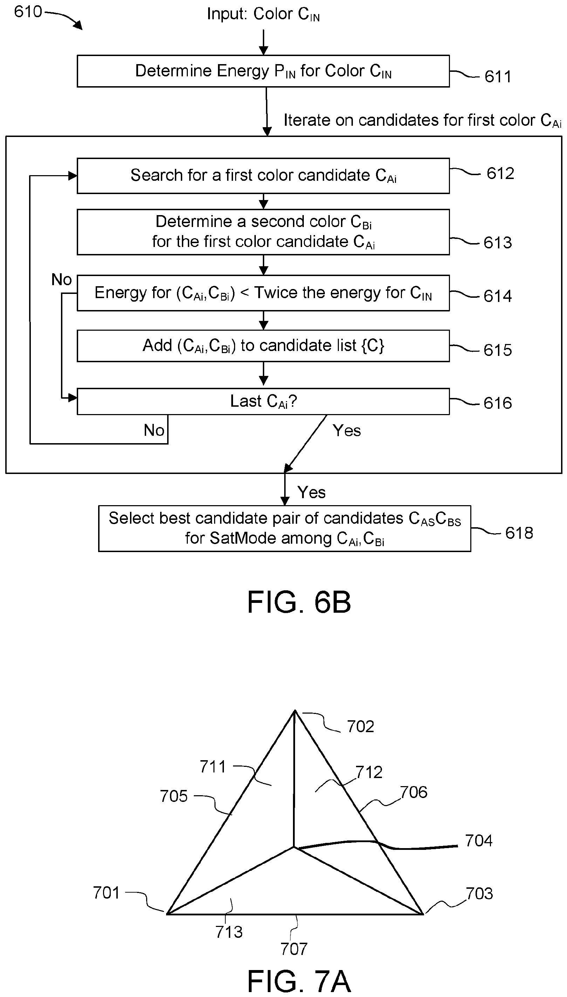

**FIG. 6B** illustrates an example process for determining a pair of ACC colors using the SatMode according to at least one embodiment. Such process is for example implemented in the device 100 of FIG. 1 and correspond to the step 610 of FIG. 6A. The input of the process is an input color $C_{IN}$. In step 611, the processor determines the energy $P_{IN}$ for the input color $C_{IN}$. Steps 612 to 616 are then iterated on candidates of a first color $C_{Ai}$ of the pair of ACC colors. These iterations correspond to a sampling of the color space and may be done according to different criteria. Since the example process 610 is directed to SatMode, the main criterion is to vary the saturation while keeping the other parameters (hue and luminance) identical or close. In other words, in step 612, the processor selects a first color $C_{Ai}$ that has a luminance and hue identical or close to the input color $C_{IN}$ but a different saturation. Secondary criteria may apply for the sampling of the first color $C_{Ai}$. For example, the color gamut space may be explored and thus the set of candidates is the full set of possible values with different saturations, a maximal color distance criterion may be used to limit the sampling to the color space around $C_{IN}$, a subset of the color gamut space may be chosen, for example using a smaller color resolution, a number of randomly selected candidates may be chosen, or only the colors present in an input image may be selected. In step 613, the processor determines a candidate for the second color $C_{Bi}$ of the pair of ACC colors. This second color is determined so that the combination of the first and second color are perceptually identical to the input color $C_{IN}$, i.e., the second color may be chosen as the symmetrical color to $C_{Ai}$ with respect to $C_{IN}$ in the color space used. For example, in RGB, XYZ or OkLab color spaces, it may be determined as follows:

$$C_{Bi} = 2.C_{IN} - C_{Ai}$$

In step 614, the processor compares the energy required for the pair of colors $(C_{Ai}, C_{Bi})$ to the energy required for the input color $C_{IN}$, more exactly to twice this energy. Indeed, when using the SACC or TACC techniques, a pixel of input color $C_{IN}$ is replaced by half pixels, either spatially or temporally, of colors $C_{Ai}$ and $C_{Bi}$. The replacement using SACC or TACC is only providing a reduction in the case where:

$$\mathcal{P}_{IN} > \frac{1}{2}\mathcal{P}(C_{Ai}) + \frac{1}{2}\mathcal{P}(C_{Bi})$$

Or

$$2 \times \mathcal{P}_{IN} > \mathcal{P}(C_{Ai}) + \mathcal{P}(C_{Bi})$$

When it is not the case, the processor jumps directly to step 616. When it is the case, in step 615, the pair of colors $(C_{Ai}, C_{Bi})$ is added to a list of candidate pairs for SatMode. In step 616, it is checked if all candidates $C_{Ai}$ for the first color have been treated. If it is not the case, the processor jumps back to step 612 to select another candidate to the first color. When all candidates $C_{Ai}$ for the first color have been treated, the processor jumps to step 618 and selects the best candidate pair among the list of candidates for SatMode. The selection can be based on the energy levels and selects the candidate pair with lowest energy, i.e., best energy reduction.

In result of this process, the best candidate pair using SatMode is selected. Similar process is performed for HueMode (step 620 of FIG. 6A) and LumMode (Step 630 of FIG. 6A), however with different criteria for the selection of the pair of colors according to the corresponding mode and thus for example varying the hue for the HueMode and varying the luminance for the LumMode.

FIG. 7A illustrates a diagram representing a RGB or RGBW color space. In such color spaces, the corners of the triangles correspond to the primary colors, with the corner 701, 702, 703 respectively corresponding to the red, green and blue primary colors. The center 704 of the triangle corresponds to the white color. When displayed in color, this diagram exhibits color gradients in various directions of the triangle, not visible in the black and white illustration of FIG. 7A. For example, gradients are observed from red to white along the line between 701 and 704, or from green to blue along the side between the corners 702 and 703. The middle 706 of this latter side corresponds to the cyan color, and the middle of the other sides 705, 707 respectively correspond to yellow and magenta colors. Gradients also exist between the middle of the sides and the center of the triangle, for example from white to yellow between 704 and 705. When displayed in color, this diagram highlights two levels of frontiers. A first level of frontiers is linked to color primaries, R, G, B, W, and the resulting triangles 711, 712, 713 in the color space. Indeed, in an RGB or RGBW color space, primaries segmentation is defined by the white-red, white-green, and white-blue segments. A secondary segmentation is defined by the white-yellow, white-cyan and white-magenta segments, forming secondary frontiers.

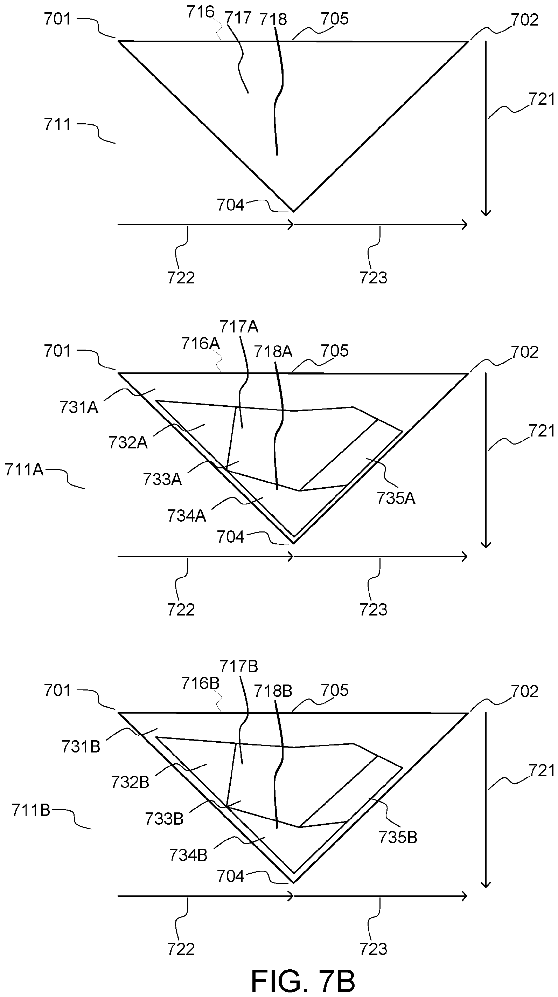

FIG. 7B illustrates a diagram representing an example of triangular pyramid extracted from the RGB or RGBW color space and the pair of pyramids representing the pairs of alternating complementary colors determined by the ACC algorithm. This example corresponds to the RGW triangle 711 of FIG. 6B. This diagram represents the color space between the red and green colors, for different values of white. For a pyramid of a given level N of white, this diagram is built by varying the value of green from 0 to N along the axis 721 while having the red value set to N, varying the value of red from N to 0 along the axis 722 while having the green value set to N and varying the value of blue in a ramp from 0 to N along the axis 723. The value N is for example comprised in the range [0, 255] in the case where the color space uses '8-bits per color'. Different diagrams can be built for different levels of white. When shown in color, this diagram exhibits continuous gradients, for example from red to green along the side between the corners 702 and 704, going through yellow in the middle, and from yellow to white along the line between 705 and 704 for example. These color gradients are not depicted in the black and white illustration of FIG. 7B.

The triangle 711 represents a set of input colors. In this triangle, the color 717 corresponds to an orange somehow saturated color while the color 718 corresponds to a lighter orange (i.e., with more white, thus closer to the white corner 704 of the RGW triangle). A fully saturated orange 716 is represented on the line between 701 and 705.

The triangle 711A represents the set of first colors of the pair of alternating complementary colors and the triangle 711B represents the set of second colors of the pair of alternating complementary colors corresponding to the input colors of triangle 711.

When displayed in color, these triangles exhibit color gradients in various directions, not depicted in the black and white illustration of FIG. 7B. They exhibit regions that are not homogeneous with the neighboring regions. Back to the example of orange colors, the pair of alternating complementary colors corresponding to the somehow saturated orange input color 717 are respectively represented by the color 717A of the triangle 711A for the first color and the color 717B of the triangle 711B for the second color. These colors are comprised in regions 733A, 733B that exhibit hue differences according to gradients of mostly red color variations for region 733A and mostly green color variations for region 733B. As mentioned above, the pair of alternating complementary colors selected to replace the somehow saturated orange input color 717 are a somehow saturated red color 717A for the first color of the color pair while the second color of the color pair is a somehow saturated green color 717B. The combination, either spatially or temporally alternating, of these colors will be perceived by the viewer as the somehow saturated orange color 717. The pair of alternating complementary colors corresponding to the lighter orange color 718 are respectively represented by the color 718A of the triangle 734A for the first color and the color 718B of the triangle 734B for the second color. These colors are comprised in regions 734A, 734B that exhibit no hue differences but show varying saturation of the original color. As mentioned above, the pair of alternating complementary colors selected to replace the lighter orange color 718 are an even more saturated orange 718A for the first color of the color pair while the second color of the color pair is an even more desaturated orange 718B.

The discontinuity exhibited between regions (or areas) is related to the choice performed by the ACC algorithm and corresponds to the ACC processing modes introduced above. The region 731A/731B corresponds to the situation where it is not possible to find a symmetric color for the second color being inside the gamut with an energy lower than the energy of the original color. This is typically the case on the border of the triangle. In this region, the first and second colors should be the same as the original color. The "SatMode", which corresponds to the situation where the selected pair of ACC colors have varying saturation (in other words, the visual color gradient of such region varies from the white/grey region to saturated regions) occurs when one color of the pair of colors is desaturated and the other is more saturated. This mode corresponds to the lateral regions 732A/732B and 735A/735B. The "HueMode", which corresponds to the situation where the selected pair of ACC colors shows hue differences (in other words, the segment connecting the pair of colors is parallel to the gamut border), corresponds to the central region 733A/733B. Finally, the "LumMode" corresponds to the situation where colors may be replaced according to varying luminance using a darker and a lighter color than the original color and corresponds to the bottom region 734A/734B.

These regions and the corresponding modes have been described above in the context of the RGW triangle but the same principles apply to the other two triangles of the color space (GBW of triangle 712 of FIG. 7A and RBW of triangle 713 of FIG. 7A).

In summary, in the ACC context, taking into account the ACC minimization of power consumed process, the data are homogeneous by color volume regions and exhibit non-C2 derivable transitions between homogeneous regions. Thus, a color triangle may be split in different homogeneous regions: a central region where "HueMode" should be used, lateral regions where "SatMode" should be used, a bottom region where "LumMode" should be used and a peripheral region where no replacement should be done ("NoMode").

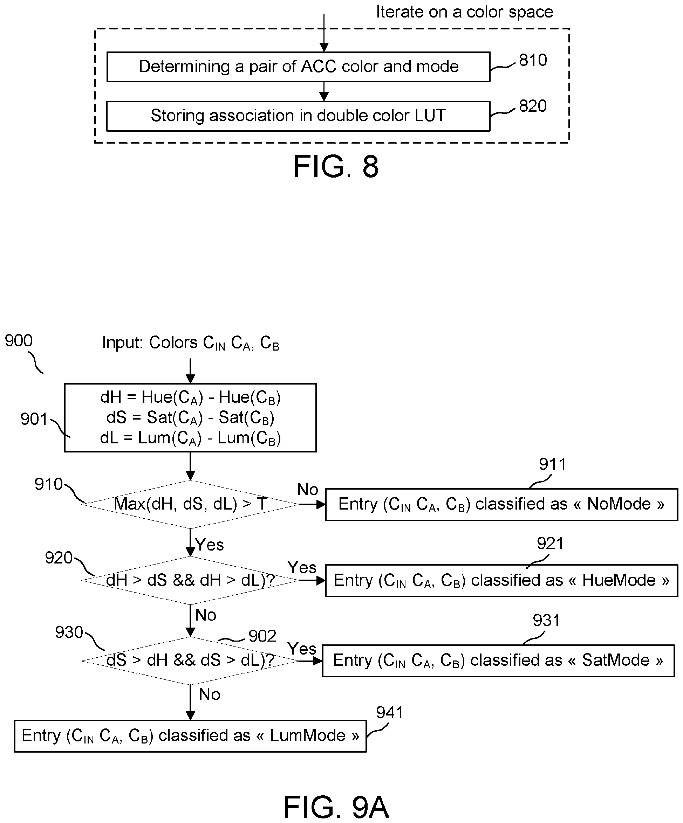

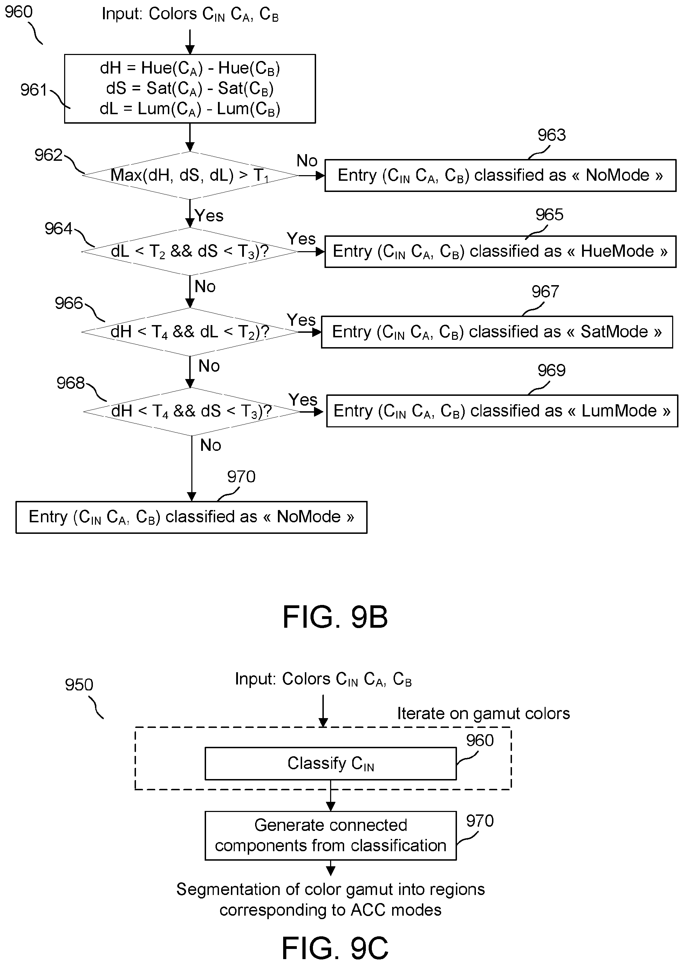

As introduced above, when a look-up table with reduced resolution is used for determining the pair of colors, it is necessary to implement some interpolation mechanism. The existence of homogeneous regions that can be segmented suggests that a pre-segmentation of the color spaces in the regions introduced above, and a use of these regions to limit the interpolation can be efficient as color interpolation will be easier and more valid when bound by region limits (the pre-segmented limits). Such interpolation mechanism should take into account the different regions listed above to prevent interpolation between regions corresponding to different modes. For this reason, it is proposed to enhance the double color LUT by adding the mode used for determining the pair of ACC colors. Therefore, an entry of the double color LUT, indexed by an input color, would comprise the pair of replacement colors for the input color and an information indicative of the mode used for determining the pair of ACC colors. The construction of such LUT may be done as described in FIGs 6A, 6B and 8. When the double color LUT does not comprise any information related to the ACC mode, such information may be determined by a classification algorithm as described in FIGs 9A and 9B.

FIG. 8 illustrates a process to build a double color LUT according to at least one embodiment. Such process is for example implemented in the device 100 of FIG.1. In step 810, a pair of ACC colors and corresponding mode is determined for example as described in FIG. 6A. In step 820, the association is stored in a double color look-up table.

FIG. 9A illustrates a first example of process to categorize the double color LUT according to at least one embodiment. Such process is for example implemented in the device 100 of FIG.1. When a double color LUT does not comprise an information indicative of the mode used for determining the pair of ACC colors, the process 900 allows to generate such information by classifying the pair of colors. This is the case when the process for creating the double color LUT samples a color space to determine the pair of ACC colors for each input color. The categorization process takes as input the color pair $(C_A, C_B)$ for the input color $C_{IN}$, corresponding to one entry of the double color LUT. In step 901, the processor determines a hue difference, a saturation difference and a luminance difference between respectively the hue value of the first color of the pair $(C_A)$ and the hue value of the second color of the pair $(C_B)$, the saturation value of the first color of the pair $(C_A)$ and the saturation value of the second color of the pair $(C_B)$, the luminance value of the first color of the pair $(C_A)$ and luminance value of the second color of the pair $(C_B)$. In step 910, the processor compares these difference values with a common threshold (as illustrated in the figure) or with respective thresholds for the hue, saturation and luminance. When none of the difference values is greater than the common threshold or the respective thresholds, it is considered that no replacement color has been determined. In this case, the processor jumps to step 911 and classifies the entry for the input color $C_{IN}$ as corresponding to "NoMode". When at least one of the difference values is greater than the corresponding threshold, the processor jumps to step 920 and compares the value of the hue difference with values of the saturation difference and luminance difference to determine if the hue difference is the biggest difference. When it is the case, the processor jumps to step 921 and classifies the entry for the input color $C_{IN}$ as corresponding to "HueMode". If it is not the case, the processor jumps to step 930 and compares the value of the saturation difference with the values of the hue difference and luminance difference to determine if the saturation difference is the biggest difference. When it is the case, the processor jumps to step 931 and classifies the entry for the input color $C_{IN}$ as corresponding to "SatMode". If it is not the case, the processor jumps to step 941 and classifies the entry for the input color $C_{IN}$ as corresponding to "LumMode". The computations and comparisons of process 900 are done in a Unifor Color Space.

In at least one embodiment, the threshold T is set to zero so that any ACC color will be considered, even with a small difference. In other embodiments, the threshold $T_1$ is set to a fraction of the color range, for example 1% ,2%, 5% or more, so that a more or less significant difference needs to be achieved in order to replace a color by an ACC color.

Computing hue, saturation and luminance is done conventionally. For example, when the color space is a XYZ space, the color coordinates are first converted in Lab space as follows. Knowing a reference white $(X_{ref}, Y_{ref}, Z_{ref})$:

$$L = 116 f_x - 16$$

$$a = 500\left(f_x - f_y\right)$$

$$b = 200\left(f_y - f_z\right)$$

$$f_{x|y|z} = \begin{cases} \sqrt[3]{v_{ref}} & if\ v_{ref} > \varepsilon \\ \dfrac{\kappa\ v_{ref} + 16}{116} & otherwise \end{cases} \Bigg| with\ v_{ref} = \begin{vmatrix} \dfrac{X}{X_{ref}} & or \\ \dfrac{Y}{Y_{ref}} & or \\ \dfrac{Z}{Z_{ref}} & resp. \end{vmatrix}$$

With $\varepsilon$ = 216/24389 and $\kappa$ = 24389/27.

Then the luminance L, saturation (chroma) C and hue H are determined by:

$$L = L$$

$$C = \sqrt{a^2 + b^2}$$

$$H = \begin{cases} \arctan\left(\dfrac{b}{a}\right) & if\ \arctan\left(\dfrac{b}{a}\right) \geq 0 \\ \arctan\left(\dfrac{b}{a}\right) + 360° & otherwise \end{cases}$$

**FIG. 9B** illustrates a second example of process to categorize the double color LUT according to at least one embodiment. Such process is for example implemented in the device 100 of FIG. 1. This process 960 is similar to the process 900 of figure 9A and is implemented in the same context. The difference between these processes is related to the tests done for classifying the modes. In step 961, the processor determines a hue difference, a saturation difference and a luminance difference between respectively the hue value of the first color of the pair ($C_A$) and the hue value of the second color of the pair ($C_B$), the saturation value of the first color of the pair ($C_A$) and the saturation value of the second color of the pair ($C_B$), the luminance value of the first color of the pair ($C_A$) and luminance value of the second color of the pair ($C_B$). In step 962, the processor compares these difference values with a first threshold $T_1$ (as illustrated in the figure) or with respective thresholds for the hue, saturation and luminance. When none of the difference values is greater than $T_1$, or than the respective thresholds, it is considered that no replacement color has been determined. In this case, the processor jumps to step 963 and classifies the entry for the input color $C_{IN}$ as corresponding to "NoMode". When at least one of the difference values is greater than the threshold $T_1$, the processor jumps to step 964 and checks the luminance and saturation differences. If the luminance difference is smaller than a second threshold $T_2$ and the saturation difference is smaller than a third threshold $T_3$, the processor jumps to step 965 and classifies the entry for the input color $C_{IN}$ as corresponding to "HueMode". If it is not the case, then the processor jumps to step 966 and checks the hue and luminance differences. If the hue difference is smaller than a fourth threshold $T_4$ and the luminance difference is smaller than the second threshold $T_2$, the processor jumps to step 967 and classifies the entry for the input color $C_{IN}$ as corresponding to "SatMode". If it is not the case, then the processor jumps to step 968 and checks the hue and saturation differences. If the hue difference is smaller than the fourth threshold $T_4$ and the saturation difference is smaller than the third threshold $T_3$, the processor jumps to step 969 and classifies the entry for the input color $C_{IN}$ as corresponding to "LumMode". If it is not the case, the processor jumps to step 970 and classifies the entry for the input color $C_{IN}$ as corresponding to "NoMode". The computations and comparisons of process 960 are done in a Unifor Color Space.

In at least one embodiment, the threshold $T_1$ is set to zero so that any ACC color will be considered, even with a small difference. In other embodiments, the threshold $T_1$ is set to a fraction of the color range, for example 1% ,2%, 5% or more, so that a more or less significant difference needs to be achieved in order to replace a color by an ACC color. In at least one embodiment, the thresholds $T_1$, $T_2$, $T_3$ and $T_4$ are all set to zero. In at least one embodiment, one or more of the thresholds $T_1$, $T_2$, $T_3$ and $T_4$ are set to a fraction of the color range, for example 1% ,2%, 5% or more.

A third example of process to categorize the double color LUT, not illustrated, may be implemented by computing the color vector between the first color of the pair of color and the hue of the second pair of color and evaluate its characteristics. When the vector is connected to colors with a higher hue difference, the mode is classified as HueMode. When the vector is connected to colors with a higher saturation difference, the mode is classified as SatMode. When the vector is connected to colors with a higher value difference, the mode is classified as ValueMode. If vector norm is small or null, the mode is classified as NoMode.

**FIG. 9C** illustrates a process to determine a segmentation of the color gamut into ACC mode regions according to at least one embodiment. Such process 950 is for example implemented in the device 100 of FIG. 1. The processor first iterates step 960 on all gamut colors to classify the input color as described above in FIG. 9A or FIG. 9B. In step 970, the processor generates connected components from this classification by simply connecting neighboring colors in the gamut with the same label. A 4-connection or 8-connection can be envisioned for example. This results in a segmentation of the color gamut in regions of connected colors with the same ACC mode label, corresponding to a color volume partitioning.

As regions are stable enough, in shape, over the N levels, IEC 61966-12-1 "Metadata for identification of colour gamut (Gamut ID)" can be used to describe the various color volumes partitioned as described above, from N=0 to N=255. For this, a segmentation in 3D regions is realized in one or the other of the pair of colors. Identifying region borders and their edges by for example a Gradient based filter (e.g., Canny filter or Sobel filter) gives crease line inputs for building the Gamut ID hierarchical representation. Feature points are first found by point extraction algorithms and connected in the stack of images forming the CS1 and CS2 color regions. Then a pre-processing identifies points in the color space and their relations in the 3D space to describe facets having these points as vertices, and 3D volumes described by connecting the facets.

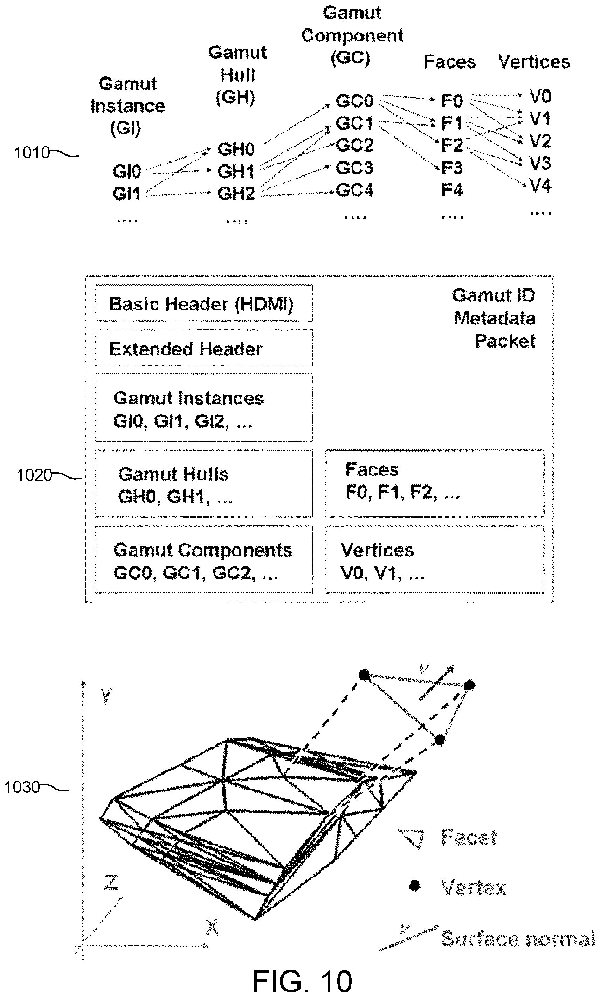

**FIG. 10** illustrates different aspects of the Gamut ID metadata as specified in IEC 61966-12-1. The logical structure 1010 of the Gamut ID metadata comprises a set of elements and includes the references from one element to another. This allows, for example, to build Faces from Vertices and Gamut Components from Faces. Vertices are defined by their three colour coordinates, Faces are defined by three indices of three vertices out of the set of vertices, a Gamut Component (GC) is a connected 3D surface and is defined by a list of at least one face, a Gamut Hull is a closed surface of a connected volume in colour space and is defined by a list of at least one Gamut Component (GC), a Gamut Instance (GI) represents a valid Gamut Boundary Description (GBD) and is defined by a list of at least one Gamut Hull (GH), the described volume is the union of volumes of referenced GHs. This structure may be carried out in a binary format as shown by the Gamut ID metadata 1020 and may represented in a color space as shown by the GBD example 1030.

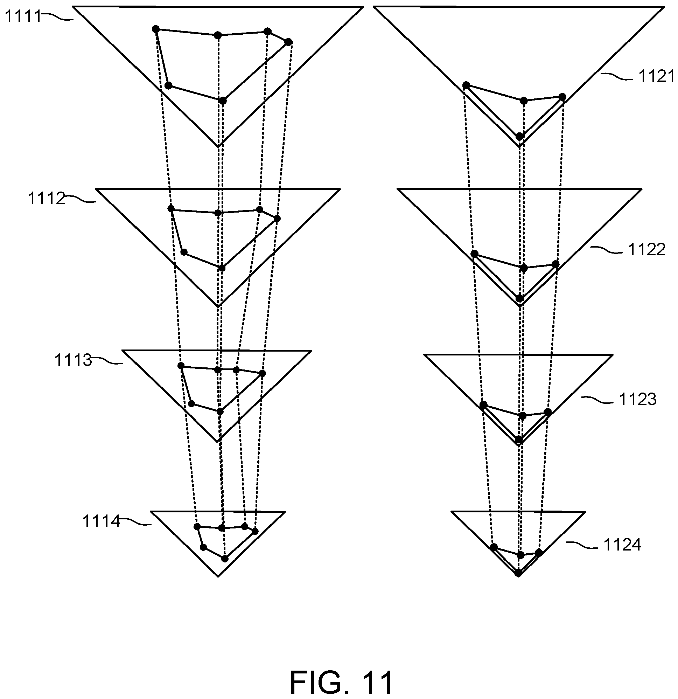

**FIG. 11** illustrates an example of a portion and slices of the Gamut ID used for ACC interpolation. It represents the color segmentation in the color spaces of the pair of colors for selected regions. Triangles 1111, 1112, 1113, 1114 are related to the color space for the pair of colors and show the central region using "HueMode" for various slices (N=255, 191, 127 and 63 in these examples). Similarly, triangles 1121, 1122, 1123, 1124 are related to the color space of the pair of colors and show the bottom region using "LumMode" for the same values of N. Using the principles introduced with respect to FIG. 10, vertices of the contours of the color regions can be used to describe the different mode regions, and may be combined into facets. Therefore, the multiple regions for both colors of the pair of colors may be described using the formalism of Gamut ID metadata as an ACC Gamut component.

Based on a complete ACC Gamut ID, a LUT interpolation mesh can be defined inside each Gamut Hull, avoiding this mesh to cross the Gamut Hull borders, to ensure that any interpolation of colors based on such mesh will be in an homogeneous domain in terms of color variations, i.e., the variations of colors are continuous, in the vicinity of the mesh vertices, ensuring no error will occur when computing the LUT output using the meshes. From this point, with the Gamut Hulls limiting the interpolation meshes, the LUT points values may be propagated inside the Gamut Hulls, without risk to create errors on the Gamut Hull borders for both colors of the pair of ACC colors. Regions of the color spaces not reached by the LUT meshes inside Gamut Hulls may be assigned the same color for both colors of the pair of colors to avoid flickering for example.

These tools allow to represent color space portion volumes and to realize inside them LUT calculations such as interpolations. These color space portions may be represented in a compact manner using a 3D color gamut mesh and transmitted from an emitter to receiver using IEC 61966-12-1 for example to define a LUT processing on one side and apply it on the other side as needed.

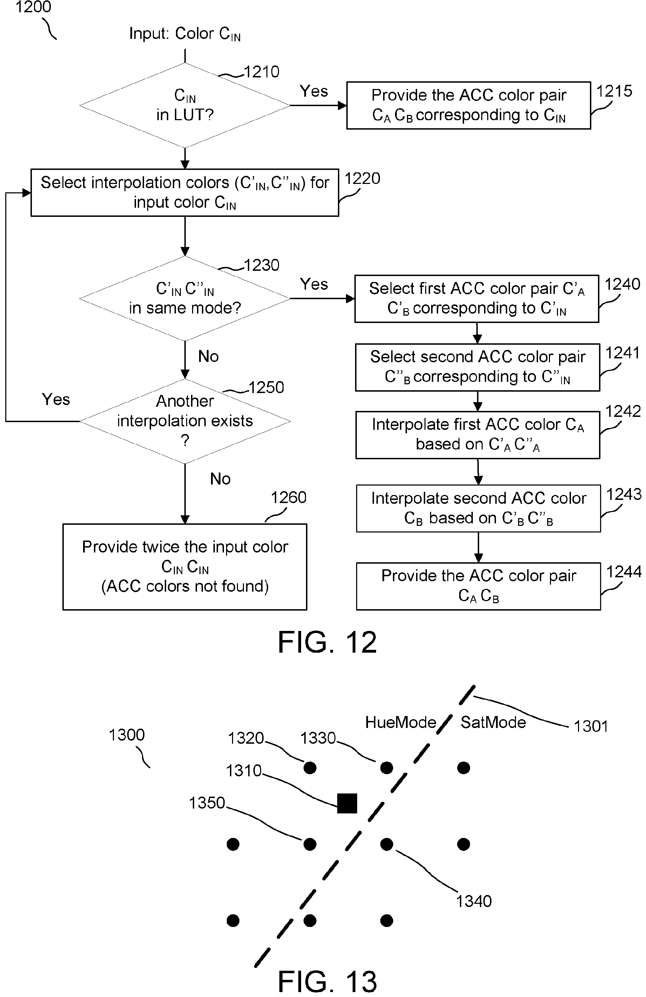

**FIG. 12** illustrates an example of process for interpolating ACC colors according to at least one embodiment where the double color look-up table is enhanced with mode information. Such process 1200 is for example implemented in the device 100 of FIG.1. An illustration example is given in FIG. 13. The input of the process is an input color $C_{IN}$. In step 1210, the processor checks if the value of the color $C_{IN}$ is present in the double color LUT. When it is the case, then no interpolation is needed and thus the processor jumps to step 1215 and directly provides the ACC color pair $C_A$, $C_B$ corresponding to the input color $C_{IN}$. When it is not the case, an interpolation of the input color is needed, and the processor jumps to step 1220. In this step, the processor selects a candidate couple of interpolation colors $C'_{IN}$, $C''_{IN}$ in the proximity of the input color $C_{IN}$ as interpolation colors. This selection is done according to conventional techniques for determining interpolation, such as trilinear interpolation. In step 1230, the processor checks whether the candidate couple of interpolation colors $C'_{IN}$, $C''_{IN}$ are in the same mode, in other words, if the same mode was used to determine the ACC colors for these colors. When it is the case, the processor jumps to step 1240. In this step, the processor selects the first ACC color pair $C'_A$, $C'_B$ corresponding to the first interpolation color $C'_{IN}$. Then, in step 1241, the processor selects the second ACC color pair $C''_A$, $C''_B$ corresponding to the second interpolation color $C''_{IN}$. In step 1242, the first color $C_A$ of the pair of ACC colors is interpolated based on $C'_A$ and $C''_A$. In step 1243, the second color $C_B$ of the pair of ACC colors is interpolated based on $C'_B$ and $C''_B$. Finally, in step 1244, the processor provides the pair of ACC colors $C_A$, $C_B$. When the candidate couple of interpolation colors $C'_{IN}$, $C''_{IN}$ are not in the same mode in step 1330, the processor jumps to step 1250. In step 1250, the processor checks if another candidate couple of colors $C'_{IN}$, $C''_{IN}$ may be used for the interpolation of the input color $C_{IN}$. When it is the case, the processor jumps to step 1220 and selects another candidate couple of colors $C'_{IN}$, $C''_{IN}$. In step 1250, when no candidate couple of interpolation colors exists, the processor jumps to step 1260. In step 1260, the processor provides to the input color $C_{IN}$ as pair of ACC colors $C_A$, $C_B$ since no correct interpolation was found.

**FIG. 13** illustrates an example of interpolation according to the process described in FIG. 12. The figure represents a color space 1300. It is illustrated here in two dimensions for the simplicity of the drawings but in reality, since the process is related to colors, it is occurring in a 3D color space. In this figure, the round dots represent the color resolution of the double color LUT. The dashed line 1301 represents the frontier between two modes: colors at the top-left side of this line have been processed by the ACC process using the "HueMode" and colors at the bottom-right side of this line have been processed by the ACC process using the "SatMode". The square dot 1310 represents an input color $C_{IN}$. In a first iteration, the process 1200 of FIG. 12 selects the colors 1320 and 1340 as a candidate couple of interpolation colors $C'_{IN}$, $C''_{IN}$. However, as checked in step 1230 of FIG. 12, these colors do not belong to the same mode. Therefore, this couple cannot be selected for interpolation and the search is iterated for another candidate couple. The candidate couple of color 1330 and 1350 is selected and since the ACC process for both of these colors uses the same mode (i.e., "HueMode"), this couple can be selected. In the embodiment described with respect to FIG. 12, the first valid couple of interpolation colors is selected for defining the pair of ACC colors $C_A$, $C_B$. In another embodiment, the process is iterated multiple times, resulting potentially in multiple candidates and the best candidate is selected. The selection may be done based on best energy reduction, closest distance of the input color or other criteria of the domain.

Considering the base case of linear interpolation, as introduced above, it is preferable to perform an interpolation only when the two colors to interpolate between are in a homogeneous color space region, where a linear interpolation is relevant. Up to eight colors to interpolate (the eight vertices of a cube) are used in the classical Color LUT interpolation. In this case it is as well preferable that they are all in a homogeneous color space region, where the linear interpolations are relevant.

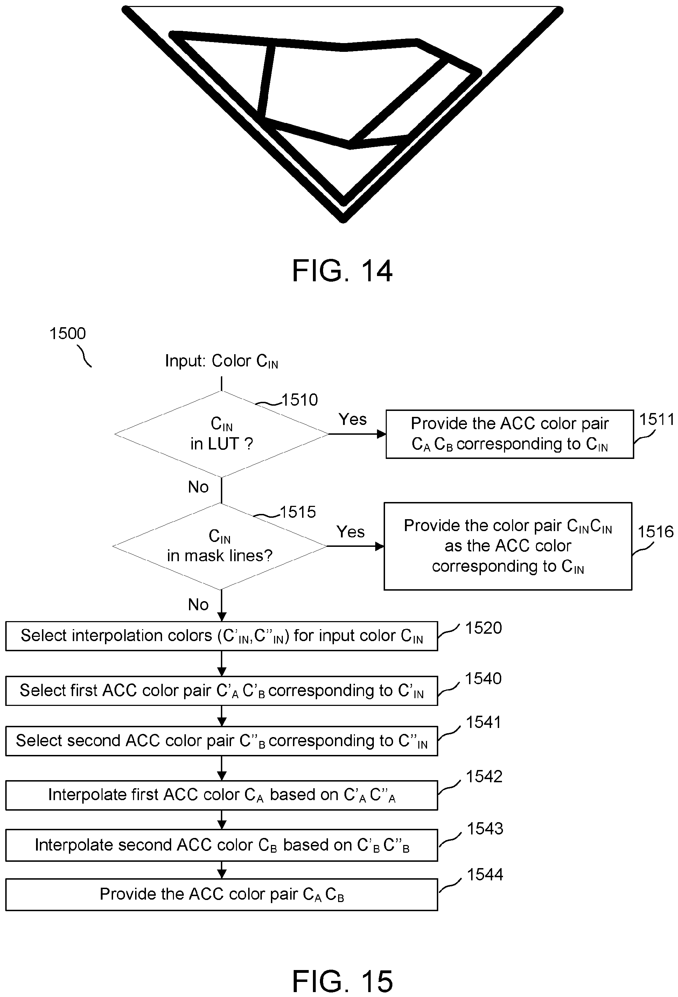

**FIG. 14** illustrates an example of slice of triangular pyramid extracted from the RGB or RGBW color space for one pair of alternating complementary colors determined by the ACC algorithm using mask lines according to at least one embodiment. Unlike the embodiments described above, this embodiment is based on a double color LUT that does not comprise any mode information and that does not use the 3D color gamut mesh described with respect to FIG. 10. In this embodiment, instead of enhancing the look-up table, it is proposed to use mask lines on the mode frontiers to prevent incorrect interpolation.

At least one embodiment proposes to mask color regions incompatible with 3D LUT interpolation. This may be done using masking lines localized at the borders between the regions corresponding to the different modes for determining the pair of ACC color, and also at the edges between the RGW, GBW and BRW sub-triangles.

The figure represents a color space for a single color of the pair of ACC colors and shows the mask lines (wide black lines) that overlap with the different mode region limits and well as at the edges of the triangle. For colors within a mask line, the interpolation is inhibited, and the input color is just displayed unchanged. The thickness $T$ of the masking lines (exaggerated in the figure for the sake of visibility) takes into account the distance between nodes in the 3D LUT (for example 256/N). This ensures that any color that is not within a mask line can be interpolated within a region of same mode.

The present embodiment is less efficient than the embodiment described above in terms of gains in energy of the ACC process as more color points are transmitted unchanged, depending on the width of the mask lines.

**FIG. 15** illustrates an example of process for interpolating ACC colors according to at least one embodiment using mask lines. Such process 1500 is for example implemented in the device 100 of FIG. 1. The input of the process is an input color $C_{IN}$. In step 1510, the processor checks if the value of the color $C_{IN}$ is present in the double color LUT. When it is the case, no interpolation is needed, thus the processor jumps to step 1511 and directly provides the (non-interpolated) ACC color pair $C_A$, $C_B$ corresponding to the input color $C_{IN}$. Else, in step 1515, the processor checks if the value of the color $C_{IN}$ is within a mask line. When it is the case, no interpolation is authorized, thus the processor jumps to step 1516 and directly provides a color pair made of $C_{IN}$, $C_{IN}$ as the (non-interpolated and not modified) pair of ACC colors corresponding to the input color $C_{IN}$, in other words the color is not replaced and stays identical. Else, when the input color $C_{IN}$ is not present in the double color LUT and is not within a mask line, an interpolation of the input color is needed, and the processor jumps to step 1520. In this step, the processor selects a candidate couple of interpolation colors $C'_{IN}$, $C''_{IN}$ in the proximity of the input color $C_{IN}$ as interpolation colors. This selection is done according to conventional techniques for determining interpolation. In step 1540, the processor selects the first ACC color pair $C'_A$, $C'_B$ corresponding to the first interpolation color $C'_{IN}$. Then, in step 1541, the processor selects the second ACC color pair $C''_A$, $C''_B$ corresponding to the second interpolation color $C''_{IN}$. In step 1542, the first color $C_A$ of the pair of ACC colors is interpolated based on $C'_A$ and $C''_A$. In step 1543, the second color $C_B$ of the pair of ACC colors is interpolated based on $C'_B$ and $C''_B$. Finally, in step 1544, the processor provides the (interpolated) pair of ACC colors $C_A$, $C_B$.

Although some parts of the description refer to images, the embodiments are not restricted to images and apply to any type of visual media content such as conventional (2D) videos, stereoscopic (3D) images or videos, 360° immersive images or video, point clouds, based on the same principles as described above but iterated temporally and/or spatially.

In general, one or more other examples of embodiments can also provide a computer readable storage medium, e.g., a non-volatile computer readable storage medium, having stored thereon instructions for encoding or decoding picture information such as video data according to the methods or the apparatus described herein. One or more embodiments can also provide a computer readable storage medium having stored thereon a bitstream generated according to methods or apparatus described herein. One or more embodiments can also provide methods and apparatus for transmitting or receiving a bitstream or signal generated according to methods or apparatus described herein.

Many of the examples of embodiments described herein are described with specificity and, at least to show the individual characteristics, are often described in a manner that may sound limiting. However, this is for purposes of clarity in description, and does not limit the application or scope of those aspects. Indeed, all the different aspects can be combined and interchanged to provide further aspects. Moreover, the embodiments, features, etc. can be combined and interchanged with others described in earlier filings as well.

Various implementations involve decoding. "Decoding", as used in this application, can encompass all or part of the processes performed, for example, on a received encoded sequence to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein are descriptive terms. As such, they do not preclude the use of other syntax element names.

When a figure is presented as a flow diagram, it also provides a block diagram of a corresponding apparatus. Similarly, when a figure is presented as a block diagram, it also provides a flow diagram of a corresponding method/process.

In general, the examples of embodiments, implementations, features, etc., described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. One or more examples of methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users. Also, use of the term "processor" herein is intended to broadly encompass various configurations of one processor or more than one processor.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory. Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information. Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

## Claims

1. A method comprising, for an input color, determining a pair of alternating complementary colors based on the input color, wherein an average color of the pair of alternating complementary colors is perceptually similar to the input color and wherein a sum of the energy consumed by displaying a pair of colors of the alternating complementary colors is lower than twice the energy consumed by displaying an input color, wherein the pair of colors of the alternating complementary colors is selected according to a selection mode.

2. The method of claim 1, further comprising determining a hue difference, a saturation difference and a luminance difference between respectively the hue value of the first color of the pair and the hue value of the second color of the pair, the saturation value of the first color of the pair and the saturation value of the second color of the pair, the luminance value of the first color of the pair and luminance value of the second color of the pair, and determining the selection mode,

wherein the selection mode is a first mode identified as "NoMode" when the hue difference, the saturation difference and the luminance difference are not greater than respective thresholds, wherein the selection mode is a second mode identified as "HueMode" when the hue difference is greater than the saturation difference and also greater than the luminance difference,
wherein the selection mode is a third mode identified as "SatMode" when the saturation difference is greater than the hue difference and also greater than the luminance difference,
wherein the selection mode is a fourth mode identified as "LumMode" in the other case.

3. The method of claim 1, further comprising determining a hue difference, a saturation difference and a luminance difference between respectively the hue value of the first color of the pair and the hue value of the second color of the pair, the saturation value of the first color of the pair and the saturation value of the second color of the pair, the luminance value of the first color of the pair and the luminance value of the second color of the pair, and determining the selection mode,

wherein the selection mode is a first mode identified as "NoMode" when the hue difference, the saturation difference and the luminance difference are smaller than a first threshold, wherein the selection mode is a second mode identified as "HueMode" when the luminance difference is lower than a second threshold and the saturation difference is lower than a third threshold,
wherein the selection mode is a third mode identified as "SatMode" mode when the hue difference is lower than a fourth threshold and the luminance difference is lower than the second threshold,
wherein the selection mode is a fourth mode identified as "LumMode" when the saturation difference is lower than the third threshold and the hue difference is lower than the fourth threshold,
wherein the selection mode is a fifth mode identified as "NoMode" in the other case.

4. A method comprising iterating on input colors and, for an input color:

   storing in a look-up table the pair of alternating complementary colors; and
   associating to the input color an information indicative of the selection mode determined according to any of claims 2 or 3.

5. A method for classifying a double color look-up table, the method comprising:

   obtaining a double color look-up table that determines a pair of colors indexed by an input color, and
   iterating on input colors wherein, for an input color:

      obtaining the pair of colors indexed by the input color;
      determining a hue difference, a saturation difference and a luminance difference between respectively the hue value of the first color of the pair and the hue value of the second color of the pair, the saturation value of the first color of the pair and the saturation value of the second color of the pair, the luminance value of the first color of the pair and luminance value of the second color of the pair,
      determining the selection mode, wherein the selection mode is a first mode identified as "NoMode" when the hue difference, the saturation difference and the luminance difference are not greater than a threshold, wherein the selection mode is a second mode identified as "HueMode" when the hue difference is greater than the saturation difference and also greater than the luminance difference, wherein the selection mode is a third mode identified as "SatMode" when the saturation difference is greater than the hue difference and also greater than the luminance difference, wherein the selection mode is a fourth mode identified as "LumMode" in the other case, and
      associating information indicative of the selection mode to the input color.

6. A method comprising,

   obtaining a double color look-up table according to any of claim 4 or 5,
   for an input color, determining that the input color is not present in the double color look-up table and responsively:

      determining a couple of candidate colors for interpolation according to the resolution of the input color,
      determining if information indicative of the mode for the two colors of the couple of candidate colors is identical and responsively:

         obtaining, from the double color look-up table, the pair of colors associated with the first color,
         obtaining, from the double color look-up table, the pair of colors associated with the second color,
         determining a first color by interpolating the first colors of the pairs of colors,
         determining a second color by interpolating the second colors of the pairs of colors, and
         providing a pair of colors comprising the determined first and second colors as the pair of colors associated with the input color,

   wherein when the input color is present in the double color look-up table, providing the pair of colors associated with the input color,
   and wherein when no couple of candidate colors with identical information indicative of the mode can be determined, providing a pair of colors where each color is the input color as the pair of colors associated with the input color.

7. A method comprising:

   obtaining a first pixel of a first image of a video

obtaining a pair of alternating complementary colors according to the color of the first pixel of the first image of the video based on the method of claim 4,

inserting in the video a second image temporally successive to the first image, and

setting the color of the first pixel of the first image to the first color of the pair of alternating complementary colors and setting the color of a second pixel of the second image to the second color of the pair of alternating complementary colors, wherein the first and second pixels are at the same position in their respective images.

8. A method comprising:

obtaining a pair of temporally successive pixels of a video,

obtaining a pair of alternating complementary colors according to the color of the first pixel of the pair of pixels or to an average between the color of the first pixel of the pair of pixels and the color of the second pixel of the pair of pixels based on the method of claim 4,

setting the color of the first pixel of the pair of temporally successive pixels to the first color of the pair of alternating complementary colors and the color of the second pixel of the pair of temporally successive pixels to the second color of the pair of alternating complementary colors.

9. A method comprising:

obtaining a pair of adjacent pixels of an image,

obtaining a pair of alternating complementary colors according to the color of the first pixel of the pair of adjacent pixels or to an average between the color of the first pixel and the color of the second pixel of the pair of adjacent pixels based on the method of claim 4,

setting the color of the first pixel of the pair of adjacent pixels to the first color of the pair of alternating complementary colors and the color of the second pixel of the pair of adjacent pixels to the second color of the pair of alternating complementary colors.

10. The method of claim 8, further comprising doubling the number of pixels of the image in horizontal direction or in vertical direction or in both directions, before obtaining a pair of adjacent pixels of an image.

11. An apparatus comprising a processor configured to, for an input color, determine a pair of alternating complementary colors based on the input color, wherein an average color of the pair of alternating complementary colors is perceptually similar to the input color and wherein a sum of the energy consumed by displaying a pair of colors of the alternating complementary colors is lower than twice the energy consumed by displaying an input color, wherein the pair of colors of the alternating complementary colors is selected according to a selection mode.

12. The apparatus of claim 11, wherein the processor is further configured to determine a hue difference, a saturation difference and a luminance difference between respectively the hue value of the first color of the pair and the hue value of the second color of the pair, the saturation value of the first color of the pair and the saturation value of the second color of the pair, the luminance value of the first color of the pair and luminance value of the second color of the pair, and determine the selection mode,

wherein the selection mode is a first mode identified as "NoMode" when the hue difference, the saturation difference and the luminance difference are not greater than respective thresholds, wherein the selection mode is a second mode identified as "HueMode" when the hue difference is greater than the saturation difference and also greater than the luminance difference,

wherein the selection mode is a third mode identified as "SatMode" when the saturation difference is greater than the hue difference and also greater than the luminance difference,

wherein the selection mode is a fourth mode identified as "LumMode" in the other case.

13. An apparatus comprising a processor configured to iterate on input colors and, for an input color:

store in a look-up table the pair of alternating complementary colors; and

associate to the input color an information indicative of the selection mode determined according to claim 12.

14. A computer program including instructions, which, when executed by a computer, cause the computer to carry out the method according to any of claims 1 to 10.

**15.** A non-transitory computer readable medium storing executable program instructions to cause a computer executing the instructions to perform a method according to any of claims 1 to 10.

FIG. 1

FIG. 2

301 302 303 304 305 306

| 147 107 0 | 127 141 141 | 82 108 160 | 189 41 168 | 163 101 101 | 137 193 37 |

~300

301' 301" 302' 302" 303' 303" 304' 304" 305' 305" 306' 306"

| 147 107 0 | 147 107 0 | 127 141 141 | 127 141 141 | 82 108 160 | 82 108 160 | 189 41 168 | 189 41 168 | 163 101 101 | 163 101 101 | 137 193 37 | 137 193 37 |

~310

301A 302A 303A 304A 305A 306A

| 0 147 0 | 210 0 0 | 147 147 0 | 104 137 210 | 71 127 68 | 54 95 220 | 133 133 133 | 224 4 220 | 224 0 0 | 0 133 133 | 0 187 71 | 174 154 0 |

~320

301B 302B 303B 304B 305B 306B

FIG. 3A

340

341

| 301 | 302 | 301 | 303 |
|-----|-----|-----|-----|
| 302 | 301 | 303 | 304 |
| 301 | 303 | 305 | 306 |

350

351 352
353
354

| 301A | 301B | 302A | 302B | 301A | 301B | 303A | 303B |
|------|------|------|------|------|------|------|------|
| 301B | 301A | 302B | 302A | 301B | 301A | 303B | 303A |
| 302A | 302B | 301A | 301B | 303A | 303B | 304A | 304B |
| 302B | 302A | 301B | 301A | 303B | 303A | 304B | 304A |
| 301A | 301B | 303A | 303B | 305A | 305B | 306A | 306B |
| 301B | 301A | 303B | 303A | 305B | 305A | 306B | 306A |

FIG. 3B

FIG. 4A

FIG. 4B

| 501 | 502 | 503 | 504 | 505 | 506 |
|---|---|---|---|---|---|
| 147,107,0 | 127,141,141 | 82,108,160 | 189,41,168 | 163,101,101 | 137,193,37 |

~500

| 501A | 502A | 503A | 504A | 505A | 506A |
|---|---|---|---|---|---|
| 0, 147,0 | 147, 147, 0 | 71,127,68 | 133,133,133 | 224,0,0 | 0,187,71 |
| 210, 0, 0 | 104,137,210 | 54,95,220 | 224,4,220 | 0,133,133 | 174,154,0 |

~510

| 501B | 502B | 503B | 504B | 505B | 506B |

# FIG. 5A

550

551

| 301 | 302 | 303 |
|---|---|---|
| 302 | 301 | 303 |

t1

552

| 303 | 304 | 305 |
|---|---|---|
| 303 | 304 | 305 |

t2

553

| 305 | 306 | 306 |
|---|---|---|
| 305 | 306 | 306 |

t3

time

560

561

| 301A | 302A | 303A |
|---|---|---|
| 302A | 301A | 303A |

t1A

562

| 301B | 302B | 303B |
|---|---|---|
| 302B | 301B | 303B |

t1B

563

| 303A | 304A | 305A |
|---|---|---|
| 303A | 304A | 305A |

t2A

564

| 303B | 304B | 305B |
|---|---|---|
| 303B | 304B | 305B |

t2B

565

| 305A | 306A | 306A |
|---|---|---|
| 305A | 306A | 306A |

t3A

time

# FIG. 5B

600

Input: Color $C_{IN}$

Search for a candidate pair ($C_{AS}$, $C_{BS}$) corresponding to input color $C_{IN}$ using SatMode — 610

Search for a candidate pair ($C_{AH}$, $C_{BH}$) corresponding to input color $C_{IN}$ using HueMode — 620

Search for a candidate pair ($C_{AL}$, $C_{BL}$) corresponding to input color $C_{IN}$ using LumMode — 630

At least one candidate ? — 640

No

Yes

650 — Select and store $C_{IN}$, $C_{IN}$ as the pair of ACC colors associated with input color $C_{IN}$

Select and store a candidate among candidate pairs as the pair of ACC colors associated with input color $C_{IN}$ — 660

# FIG. 6A

610 ⟍

Input: Color C$_{IN}$

Determine Energy P$_{IN}$ for Color C$_{IN}$ ⟍ 611

Iterate on candidates for first color C$_{Ai}$

Search for a first color candidate C$_{Ai}$ ⟍ 612

Determine a second color C$_{Bi}$
for the first color candidate C$_{Ai}$ ⟍ 613

No

Energy for (C$_{Ai}$,C$_{Bi}$) < Twice the energy for C$_{IN}$ ⟍ 614

Add (C$_{Ai}$,C$_{Bi}$) to candidate list {C} ⟍ 615

Last C$_{Ai}$? ⟍ 616

No          Yes

Yes

Select best candidate pair of candidates C$_{AS}$C$_{BS}$
for SatMode among C$_{Ai}$,C$_{Bi}$ ⟍ 618

# FIG. 6B

702

711    712
705          706
704
701          703
713
707

# FIG. 7A

FIG. 7B

Iterate on a color space

Determining a pair of ACC color and mode  810

Storing association in double color LUT  820

# FIG. 8

900

Input: Colors $C_{IN}$ $C_A$, $C_B$

901

$dH = Hue(C_A) - Hue(C_B)$
$dS = Sat(C_A) - Sat(C_B)$
$dL = Lum(C_A) - Lum(C_B)$

910  $Max(dH, dS, dL) > T$  **No** → Entry ($C_{IN}$ $C_A$, $C_B$) classified as « NoMode »  911

**Yes**

920  $dH > dS$ && $dH > dL$?  **Yes** → Entry ($C_{IN}$ $C_A$, $C_B$) classified as « HueMode »  921

**No**

930  $dS > dH$ && $dS > dL$?  902  **Yes** → Entry ($C_{IN}$ $C_A$, $C_B$) classified as « SatMode »  931

**No**

Entry ($C_{IN}$ $C_A$, $C_B$) classified as « LumMode »  941

# FIG. 9A

Input: Colors $C_{IN}$ $C_A$, $C_B$

960

961 — $dH = Hue(C_A) - Hue(C_B)$
$dS = Sat(C_A) - Sat(C_B)$
$dL = Lum(C_A) - Lum(C_B)$

962 — $Max(dH, dS, dL) > T_1$ — No → 963 Entry ($C_{IN}$ $C_A$, $C_B$) classified as « NoMode »

Yes

964 — $dL < T_2$ && $dS < T_3$? — Yes → 965 Entry ($C_{IN}$ $C_A$, $C_B$) classified as « HueMode »

No

966 — $dH < T_4$ && $dL < T_2$? — Yes → 967 Entry ($C_{IN}$ $C_A$, $C_B$) classified as « SatMode »

No

968 — $dH < T_4$ && $dS < T_3$? — Yes → 969 Entry ($C_{IN}$ $C_A$, $C_B$) classified as « LumMode »

No

970 Entry ($C_{IN}$ $C_A$, $C_B$) classified as « NoMode »

## FIG. 9B

Input: Colors $C_{IN}$ $C_A$, $C_B$

950

Iterate on gamut colors

960 — Classify $C_{IN}$

970 — Generate connected components from classification

Segmentation of color gamut into regions corresponding to ACC modes

## FIG. 9C

1010

Gamut Instance (GI) → Gamut Hull (GH) → Gamut Component (GC) → Faces → Vertices

GI0, GI1 → GH0, GH1, GH2 → GC0, GC1, GC2, GC3, GC4 → F0, F1, F2, F3, F4 → V0, V1, V2, V3, V4

1020

**Gamut ID Metadata Packet**

Basic Header (HDMI)

Extended Header

Gamut Instances
GI0, GI1, GI2, ...

Gamut Hulls
GH0, GH1, ...

Gamut Components
GC0, GC1, GC2, ...

Faces
F0, F1, F2, ...

Vertices
V0, V1, ...

1030

Y, Z, X

$v$

▽ Facet
● Vertex
$v$ Surface normal

FIG. 10

FIG. 11

1200

Input: Color $C_{IN}$

1210

$C_{IN}$
in LUT?

Yes → Provide the ACC color pair
$C_A$ $C_B$ corresponding to $C_{IN}$ — 1215

Select interpolation colors ($C'_{IN}$, $C''_{IN}$) for
input color $C_{IN}$ — 1220

1230

$C'_{IN}$ $C''_{IN}$
in same mode?

Yes →

No

Another
interpolation exists
? — 1250

Yes

No

Provide twice the input color
$C_{IN}$ $C_{IN}$
(ACC colors not found) — 1260

Select first ACC color pair $C'_A$
$C'_B$ corresponding to $C'_{IN}$ — 1240

Select second ACC color pair
$C''_B$ corresponding to $C''_{IN}$ — 1241

Interpolate first ACC color $C_A$
based on $C'_A$ $C''_A$ — 1242

Interpolate second ACC color
$C_B$ based on $C'_B$ $C''_B$ — 1243

Provide the ACC color pair
$C_A$ $C_B$ — 1244

## FIG. 12

1300

HueMode / SatMode — 1301

1320   1330

1310

1350

1340

## FIG. 13

FIG. 14

FIG. 15

Europäisches
Patentamt

European
Patent Office

Office européen
des brevets

# EUROPEAN SEARCH REPORT

**Application Number**

EP 24 30 6170

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/132680 A1 (INTERDIGITAL CE PATENT HOLDINGS SAS [FR]) 27 June 2024 (2024-06-27) | 1,7-11, 14,15 | INV. G09G5/02 G09G5/06 G09G3/20 |
| A | * page 6, line 23 - page 21, line 14 * * figures 1, 3-6 * | 2-4,6, 12,13 | |
| X | WO 2024/132682 A1 (INTERDIGITAL CE PATENT HOLDINGS SAS [FR]) 27 June 2024 (2024-06-27) | 1,11,14, 15 | |
| A | * page 6, line 25 - page 23, line 23 * * figures 1, 4-6 * | 2-4, 6-10,12, 13 | |

**TECHNICAL FIELDS SEARCHED (IPC)**

G09G

The present search report has been drawn up for all claims

| Place of search | Date of completion of the search | Examiner |
|---|---|---|
| The Hague | 5 December 2024 | Etienne, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 24 30 6170

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-4, 6-15

☐ The present supplementary European search report has been drawn up for those parts of the European patent application which relate to the invention first mentioned in the claims (Rule 164 (1) EPC).

| | **LACK OF UNITY OF INVENTION** | Application Number |
|---|---|---|
| Europäisches Patentamt / European Patent Office / Office européen des brevets | **SHEET B** | EP 24 30 6170 |

The Search Division considers that the present European patent application does not comply with the requirements of unity of invention and relates to several inventions or groups of inventions, namely:

```
    1. claims: 1-4, 6-15

        Determining a pair of alternating complementary colors.
                             ---


    2. claim: 5

        Classifying a double color look-up-table.
                             ---
```

## ANNEX TO THE EUROPEAN SEARCH REPORT
## ON EUROPEAN PATENT APPLICATION NO.

**EP 24 30 6170**

This annex lists the patent family members relating to the patent documents cited in the above-mentioned European search report.
The members are as contained in the European Patent Office EDP file on
The European Patent Office is in no way liable for these particulars which are merely given for the purpose of information.

**05-12-2024**

| Patent document cited in search report | Publication date | Patent family member(s) | Publication date |
|---|---|---|---|
| WO 2024132680  A1 | 27-06-2024 | NONE | |
| WO 2024132682  A1 | 27-06-2024 | NONE | |

EPO FORM P0459

For more details about this annex : see Official Journal of the European Patent Office, No. 12/82